# EUROPEAN PATENT SPECIFICATION

(11) **EP 1 694 750 B1**
(45) Date of publication and mention of the grant of the patent: **19.08.2009**
(21) Application number: 04813892.9
(22) Date of filing: 14.12.2004
(51) Int. Cl.: C08J 5/18, C08G 63/00, C08L 67/00, C08K 5/00

(54) **PROCESS FOR CALENDERING OF POLYESTERS**
VERFAHREN ZUM KALANDRIEREN VON POLYESTERN
PROCEDE DE CALANDRAGE DE POLYESTERS

(30) Priority: 18.12.2003 US 530802 P; 19.12.2003 US 531757 P; 12.02.2004 US 544296 P; 06.12.2004 US 5352; 06.12.2004 US 5167
(43) Date of publication of application: 30.08.2006
(73) Proprietor: EASTMAN CHEMICAL COMPANY, Kingsport TN 37660 (US)
(72) Inventor: STRAND, Marc, Alan, Kingsport, TN 37664 (US); GERMROTH, Ted, Calvin, Kingsport, TN 37664 (US); PINER, Rodney, Layne, Kingsport, TN 37664 (US)
(74) Representative: Wibbelmann, Jobst
(86) International application number: PCT/US2004/041638
(87) International publication number: WO 2005/063861

(56) References cited:
- EP-A- 0 947 543
- WO-A-20/04060990
- US-A- 6 068 910
- US-A1- 2002 188 092
- US-A1- 2003 060 542
- US-A1- 2003 187 149

## Description

### FIELD OF THE INVENTION

This invention pertains to a process for a film or sheet by calendering a polyester composition comprising one or more polyesters and a release additive. The polyester composition may comprise one or more biodegradable polyesters. The invention further pertains to polyester compositions for calendering.

### BACKGROUND OF THE INVENTION

Calendering is an economic and highly efficient means to produce film and sheet from plastics such as, for example, plasticized and rigid poly(vinyl chloride), abbreviated herein as "PVC", and poly(propylene) compositions. The film and sheet usually have a thickness ranging from 1 mil (0.025 mm) to 80 mils (2.0 mm). Calendered PVC film or sheet are readily thermoformed into various shapes that can be used in numerous applications including packaging, pool liners, graphic arts, transaction cards, security cards, veneers, wall coverings, book bindings, folders, floor tiles, and products which are printed, decorated, or laminated in a secondary operation. Additional discussion of poly(propylene) resin compositions used in calendering processes may be found, for example, in Japan Application No. Hei 7-197213 and European Patent Application No. 0 744 439 A1.

In a typical calendering process line, the plastic resin is blended with additives such as stabilizers to prevent thermal degradation; modifiers to impart clarity, heat stability or opacity; pigments; lubricants and processing aids; anti-static agents; UV inhibitor; and flame retardants. The mixed ingredients are blended and softened in a kneader or extruder. Through heat, shear and pressure, the dry powders, pellets, or liquids are fused to form a homogeneous, molten material. The extruder feeds the molten material in a continuous process to the top of the calendering section of the calendering line in between first and second heated calender rolls. Typically, four rolls are used to form three nips or gaps. The rolls, which have separate temperature and speed controls, are configured in an "L" shape or an inverted "L" shape and vary in size to accommodate different film widths. The material proceeds through the nip between the first two rolls, referred to as the feed nip. The rolls rotate in opposite directions to spread the material across the width of the rolls. The material winds between the first and second, second and third, third and fourth rolls, etc., and the gap between rolls decreases in thickness between each of the rolls such that the material is thinned between the sets of rolls as it proceeds. After passing through the calender section, the calendered polymer moves through another series of rolls where it is stretched and gradually cooled forming a film or sheet. The cooled material is then wound into master rolls. General descriptions of calendering processes are disclosed in Jim Butschli, Packaging World, p. 26-28, June 1997 and W.V. Titow, PVC Technology, 4th Edition, pp 803-848 (1984), Elsevier Publishing Co.

PVC compositions are by far the largest segment of the calendered film and sheet business. Small amounts of other thermoplastic polymers, however, such as thermoplastic rubbers, certain polyurethanes, poly(propylene), acrylonitrile/ butadiene/styrene terpolymers (referred to herein as "ABS" resins) and chlorinated polyethylene also may be processed by calendering methods. Attempts to calender lower cost, widely available polymers such as poly(ethylene terephthalate) (referred to herein as "PET") or poly(1,4-butylene terephthalate) (referred to herein as "PBT") have not been successful. For example, PET polymers with inherent viscosity values of 0.6 dL/g have insufficient melt strength to perform properly on the calendering rolls. In addition, when PET is fed to the rolls at typical processing temperatures, the PET polymer crystallizes causing a nonhomogeneous mass which is unsuitable for further processing and causes undesirable high forces on the calender bearings. The calendering of various polyester compositions and several approaches to these problems have been described, for example, in U.S. Patent No.'s 5,998,005; 6,068,910; 6,551,688; U.S. Patent Application Serial No. 10/086,905; Japan Patent Application No.'s 8-283547; 7-278418; 9-217014; 2002-53740; 10-363-908; 2002-121362; 2003-128894; 11-158358; European Patent Application No. 1 375 556 A2; and World Patent Application No. 02/28967. Although some of these difficulties can be avoided by the careful selection of polymer properties, additives, and processing conditions, calendering of polyesters can be troublesome.

Conventional processing of polyesters into film or sheet involves extruding a polyester melt through a manifold of a flat die. Manual or automatic die lip adjustment is used to control thickness across a web of material. Water-cooled chill rolls are used to quench the molten web and impart a smooth surface finish. Extrusion processes, while producing film and sheet of excellent quality, do not have the throughput and economic advantages that are provided by calendering processes. Also, the gauge tolerance in a calender process is better than in extrusion. In addition, extruded films produced from aliphatic-aromatic polyesters such as, for example, ECOFLEX^{®} Polyester (available from BASF Corporation), other similar biodegradable resins, and blends of these resins typically have poor clarity, i.e., generally are not clear but may exhibit higher clarity on contact with surfaces. This lack of clarity, in part, results from the use of antiblock additives that are required to form films using these resins by conventional processing methods such as melt casting and melt blowing. Such poor clarity makes these films unacceptable for many commercial applications.

Polymers which exhibit a glass transition temperature (abbreviated herein as "Tg") at or below room temperature produce films which are generally considered to be "flexible". In general, the greater the Tg is below room temperature, the more flexible the film will be. It is difficult, however, to produce a soft, flexible film with high strength without the addition of plasticizers. For many commercial applications needing films of higher flexibility and increased soft feel, therefore, a plasticizer is added to reduce the Tg to the desired temperature. Many plasticizers are not biodegradable, are subject to toxicity concerns, and frequently migrate from polymer compositions. For example, plasticized PVC (referred to herein as "PPVC") has met many market needs for flexible materials for over sixty years. PPVC, however, is environmentally tenacious, difficult to dispose of, and presents health concerns which make alternative materials desirable: There is a need, therefore, for a calendering process for polyesters that will produce a tough, clear, and flexible film or sheet and that do not require any plasticizers. It is also desirable that the calendered film and sheet from this process are biodegradable and, thus, non-persistent in the environment.
US-A-6 068 910 discloses polyester resin compositions for calendering, wherein the polyesters have a crystallization half-time from a molten state of at least 5 minutes together with an additive for preventing sticking of the polyester to calendering rolls.

### SUMMARY OF THE INVENTION

We have discovered that flexible, film or sheet having clarity, toughness, wand thermal resistance may be prepared by calendering semicrystalline polyesters at a temperature wherein the polyester is partially melted and retains some of its crystallinity. Our invention thus provides a process for film or sheet, comprising calendering a polyester composition, comprising one or more semicrystalline polyesters and a release additive, at a maximum temperature below the upper temperature of the melting point range of each of said one or more polyesters. These films can be used as a replacement film for poly(vinyl chloride) ("PVC") and plasticized PVC in many applications. Our process enables many semicrystalline polyesters to be calendered without the use of a plasticizer. Thus, in one embodiment of the invention, the polyester is substantially free - of plasticizer. Our process.may be used to prepare calendered film from many semicrystalline biodegradable polyesters such as, for example, one or more aliphatic-aromatic polyesters (abbreviated herein as "AAPE"), polycaprolactone, polylactic acid, polyhydroxybutyrate, polyhydroxybutyrate-valerate, or polybutylenesuccinate polymers, blends of these polymers, or copolymers thereof

The subject-matter of the invention is set forth in greater detail in the appended claims.
The AAPE's used in the process of our invention are known to be biodegradable, thus the film or sheet produced therefrom are expected to be biodegradable also. Thus one embodiment of our invention provides for a plasticizer-free biodegradable polyester film which may be produced using existing calendering equipment and which may serve as a replacement for calendered PVC films. The film or sheet are readily thermoformed into various shapes for specific packaging applications for both food and non-food products. They may be printed with a wide variety of inks and may be laminated either in-line or off-line with fabrics or other plastic film or sheet. Some specific end uses include graphic arts, transaction cards, greenhouse glazing, security cards, veneers, wall coverings, book bindings, folders and the like.

### DETAILED DESCRIPTION

It has been surprisingly discovered that semicrystalline polyesters can be calendered to form sheets or films without using plasticizers or anti-blocking additives such as hard solids, minerals, diatomaceous earth, talc, and calcium carbonate. The method involves using a release agent in combination with careful control of the temperature of the polymer melt as it passes through the calendering rolls to maintain the polyesters in the form of a semicrystalline melt. Thus, the present invention provides a process for film or sheet, comprising calendering a polyester composition, comprising one or more semicrystalline polyesters and a release additive, at a maximum temperature below the upper temperature of the melting point range of each of said one or more polyesters. The film or sheet shows excellent flexibility, clarity, and toughness and do not require the use of a plasticizer. The process of the invention is well suited for the production of films using biodegradable polyesters, which often show a semicrystalline morphology. The films that are made from biodegradable polyesters are expected to be biodegradable as well. The calendered film can have a thickness in the range of 1 mil (0.025 mm) to 80 mils (2 mm).

Each numerical parameter set forth in the following specification and attached claims should at least be construed in light of the number of reported significant digits z. and by applying ordinary rounding techniques. Further, the ranges stated in this disclosure and the claims are intended to include the entire range specifically and not just the endpoint(s). For example, a range stated to be 0 to 10 is intended to disclose all whole numbers between 0 and 10 such as, for example 1, 2, 3, 4, etc., all fractional numbers between 0 and 10, for example 1.5, 2.3, 4.57, 6.1113, etc., and the endpoints 0 and 10. also, a range associated with chemical substituent groups such as, for example, "C₁ to C₅ hydrocarbons", is intended to specifically include and disclose C₁ and C₅ hydrocarbons as well as C₂, C₃, and C₄ hydrocarbons.

The term "calender" and its various forms such as "calendering" and "calendered", as used herein, refer to any process that uses two or more rolls to form a film or sheet from a molten or partially molten polymer. The term "calendering", as used in the context of the present invention, means that the primary film forming step is from feeding a "bank" of molten or partially molten polymer in the form of a fused mass through two or more calendering rolls. By contrast "calendering" is not intended to include "finish calendering", for example, in which a preformed film is further subjected to embossing or polishing using two more or more additional rolls.

The term "biodegradable", as used herein, means that the referenced polyester or substance can degrade under environmental influences in an appropriate and demonstrable time span as defined, for example, by ASTM Standard Method D6340-98, entitled "Standard Test Methods for Determining Aerobic Biodegradation of Radiolabeled Plastic Materials in an Aqueous or Compost Environment" or by DIN Standard 54900.

The term "polyester", as used herein, is intended to include both "homopolyesters" and "copolyesters" and is understood to mean a synthetic polymer prepared by the polycondensation of one or more difunctional carboxylic acids with one or more difunctional hydroxyl compounds. The term "copolyester", as used herein, is understood to mean a polyester polymer which contains two or more dissimilar acid and/or hydroxyl monomer residues. Typically, the difunctional carboxylic acid is a dicarboxylic acid or hydroxycarboxylic acid, and the difunctional hydroxyl compound is a dihydric alcohol such as, for example, glycols and diols. Alternatively, the polyesters of the invention can be prepared from hydroxycarboxlic acids or formed via a ring opening reaction of a cyclic lactones; for example, as in polylactic acid prepared from its cyclic lactide or polycaprolactone formed from caprolactone.

The term "aliphatic-aromatic polyester", as used wherein, means a polyester comprising a mixture of residues from aliphatic or cycloaliphatic dicarboxylic acids or diols and aromatic dicarboxylic acids or diols. The term "non-aromatic", as used herein with respect to the dicarboxylic acid, diol, and hydroxycarboxylic acid monomers of the present invention, means that carboxyl or hydroxyl groups of the monomer are not connected through an aromatic nucleus. For example, adipic acid contains no aromatic nucleus in its backbone, i.e., the chain of carbon atoms connecting the carboxylic acid groups, thus is "non-aromatic". By contrast, the term "aromatic" means the dicarboxylic acid or diol contains an aromatic nucleus in the backbone such as, for example, terephthalic acid or 2,6-naphthalene dicarboxylic acid. "Non-aromatic", therefore, is intended to include both aliphatic and cycloaliphatic structures such as, for example, diols diacids, and hydroxycarboxylic acids, which contain as a backbone a straight or branched ' chain or cyclic arrangement of the constituent carbon atoms which may be saturated or paraffinic in nature, unsaturated, i.e., containing non-aromatic carbon-carbon double bonds, or acetylenic, i.e., containing carbon-carbon triple bonds. Thus, in the context of the description and the claims of the present invention, non-aromatic is intended to include linear and branched, chain structures (referred to herein as "aliphatic") and cyclic structures (referred to herein as "alicyclic" or "cycloaliphatic"). The term "non-aromatic", however, is not intended to exclude any aromatic substituents which may be attached to the backbone of an aliphatic or cycloaliphatic diol, diacid, or hydroxycarboxylic acid. In the present invention, the difunctional carboxylic acid may be a aliphatic or cycloaliphatic dicarboxylic acid such as, for example, adipic acid; a hydroxycarboxylic acid such as, for example, lactic acid; or an aromatic dicarboxylic acid such as, for example, terephthalic acid. The difunctional hydroxyl compound may be cycloaliphatic diol such as, for example, 1,4-cyclohexanedimethanol, a linear or branched aliphatic diol such as, for example, 1,4-butanediol, or an aromatic diol such as, for example, hydroquinone. The term "residue", as used herein, means any organic structure incorporated into a polymer through a polycondensation reaction involving the corresponding monomer. The term "repeating unit", as used herein, means an organic structure having a dicarboxylic acid residue and a diol residue, or a hydroxycarboxylic acid bonded through a carbonyloxy group. Thus, the dicarboxylic acid residues maybe derived from a dicarboxylic acid monomer or its associated acid halides, esters, salts, anhydrides, or mixtures thereof. As used herein, therefore, the term "dicarboxylic acid" is intended to include dicarboxylic acids and any derivative of a dicarboxylic acid, including its associated acid halides, esters, half-esters, lactones, salts, half-salts, anhydrides, mixed anhydrides, or mixtures thereof, useful in a polycondensation process with a diol to make a high molecular weight-copolyester. "Hydroxycarboxylic acid" is intended to include aliphatic and cycloaliphatic hydroxycarboxylic acids as well as monohydroxy-monocarboxylic acids and any derivative thereof, including their associated acid halides, esters, cyclic esters (e.g., lactones, dimers (i.e., lactic acid lactides), salts, anhydrides, mixed anhydrides, or mixtures thereof, useful in a polycondensation process or ring opening reaction to make a high molecular weight polyester.

The polyesters of our novel process are semicrystalline polymers. The term "semicrystalline", as used herein, means that the polymer contains two phases: an ordered crystalline phase and an unordered amorphous phase. Polyesters with a semicrystalline morphology exhibit both a crystalline melting temperature (Tm) and a glass transition temperature (Tg) and may be distinguished from "amorphous" polymers, which exhibit only a glass transition temperature. The presence of a glass transition temperature and a crystalline melting point are techniques often used to characterize semicrystalline and amorphous (glassy) polymers. The two thermal transitions, Tg and Tm, can be quantitatively determined by measuring changes in specific volume and heat capacity through well known analytical procedures such as differential scanning calorimetry (DSC). For example, Tg and Tm may be measured with a TA Instruments Model 2920 Differential Scanning Calorimeter programmed to scan at a rate of 20°C /min. The midpoint of the endothermic peak was considered to be the Tg. Tm was considered to be the temperature at the apex of the endothermic peak. These techniques are described more fully in Thermal Characterization of Polymeric Materials, edited by Edith A. Turi (published 1981 by Academic Press, New York, New York).

The polyesters used in the present invention typically are prepared from dicarboxylic acids and diols which react in substantially equal proportions and are incorporated into the polyester polymer as their corresponding residues or from cyclic esters (e.g., lactones) through ring opening reactions. The polyesters of the present invention that are derived from dicarboxylic acids and diols, therefore, contain substantially equal molar proportions of acid residues (100 mole%) and diol residues (100 mole%) such that the total moles of repeating units is equal to 100 mole%. The mole percentages provided in the present disclosure, therefore, may be based on the total moles of acid residues, the total moles of diol residues, or the total moles of repeating units. For example, a polyester containing 30 mole% adipic acid, based on the total acid residues, means that the polyester contains 30 mole% adipic residues out of a total of 100 mole% acid residues. Thus, there are 30 moles of adipic residues among every 100 moles of acid residues. In another example, a polyester containing 30 mole% 1,6-hexanediol, based on the total diol residues, means that the polyester contains 30 mole% 1,6-hexanediol residues out of a total of 100 mole% diol residues. Thus, there are 30 moles of 1,6-hexanediol residues among every 100 moles of diol residues.

In one embodiment, the at least one of the polyesters of our inventive process may have a crystallization half time from a molten state of less than 5 minutes. The crystallization half time may be, for example, less than 4 minutes, and less than 3 minutes. In another aspect of the invention, the polyesters may be random copolymers, meaning that the polyester comprises more than one diol, hydroxycarboxylic acid, and/or diacid residues in which the different residues are randomly distributed along the polymer chain, or "homopolymers", meaning the polyester is made up substantially of a single diacid-diol or hydroxycarboxylic acid repeating unit. The polyesters, however, are not "block copolymers", that is, polyesters in which blocks of one homopolymer structure are attached to blocks of another type of homostructure polymer. The polyesters of the invention also may be a blend of a two or more polyesters such that each polyester is in the form of a semicrystalline melt during the calendering process. In another one embodiment, however, the polyesters of our invention are not blends.

The crystallization half time of the polyester, as used herein, may be measured using methods well-known to persons of skill in the art. For example, the crystallization half time may be measured using a Perkin-Elmer Model DSC-2 differential scanning calorimeter. The crystallization half time is measured from the molten state using the following procedure: a 15.0 mg sample of the polyester is sealed in an aluminum pan and heated to 290°C at a rate of 320°C/min for 2 minutes. The sample is then cooled immediately to the predetermined isothermal crystallization temperature at a rate of 320°C/minute in the presence of helium. The isothermal crystallization temperature is the temperature between the glass transition temperature and the melting temperature that gives the highest rate of crystallization. The isothermal crystallization temperature is described, for example, in Elias, H. Macromolecules, Plenum Press: NY, 1977, p 391. The crystallization half time is determined as the time span from reaching the isothermal crystallization temperature to the point of a crystallization peak on the DSC curve.

The polyester composition of this invention comprises a polyester and a release additive effective to prevent sticking of the polyester to the calender rolls. In one embodiment, the polyester composition is sufficiently flexible that it may be calendered without the addition of plasticizer. Thus, in one example of the invention, the polyester composition is substantially free of plasticizer. The term "plasticizer", as used herein, is intended to have its ordinary meaning as understood by a person of ordinary skill in the art, that is, an organic compound added to a high polymer both to facilitate processing and to increase the flexibility of the final product by internal modification or solvation of the polymer molecule. In general, plasticizers lower the Tg of a polymer. The term "substantially free", is intended to mean that the polyester contains no plasticizer in addition or cumulative to the release additive, flame retardants, and typical additives such as, for example, antioxidants, colorants, pigments, fillers, chain extenders, and processing aids, that may be included in the polyester composition, film, and sheet of the present invention. Some of these additives, depending on their structure and miscibility with the biodegradable polyester, may impart a plasticizing effect on the copolyester. Thus, by "substantially free", it is meant that no compounds, in addition to the typical additive examples listed above, are present in the polyester composition specifically for the purpose of plasticizing or increasing the flexibility of the polyester or the film and sheet produced therefrom. In another embodiment of the invention, the polyester composition consists essentially of a polyester and a release additive. Thus, in this embodiment, the process of the invention may be carried out by simply calendering a polyester and a release additive at a maximum temperature wherein the polyester is in the form of a semicrystalline melt, meaning that the maximum temperature of the calendering process is below the upper temperature of the melting range of the polyester. For example, the film may be formed by calendering a polyester at a maximum temperature that is within melting point range of the polyester. If the film comprises a blend of 2 or more polyesters, then the film may be formed by calendering the blend at a maximum temperature that is below the upper temperature of the melting point range for each polyester. In yet another embodiment, the film may be formed by calendering the blend at a maximum temperature that is within the melting point range of each polyester. The phrase "consisting essentially of", as used herein, is intended to encompass a film in which a polyester resin and a release agent are calendered at a temperature in which the polyester is in the form of a semicrystalline melt and is understood to exclude any elements that would substantially alter the essential properties of the film to which the phrase refers. For example, the films and polyesters of this invention may include other additives such as, for example, flame retardants, antioxidants, colorants, etc. which do not alter the semicrystalline melt phase of the polyester during the calendering process. By contrast, the addition of a plasticizer or another polymer to the polyester which would be expected to alter the melt phase properties of the polyester such that the polyester was not itself in a semicrystalline melt would be excluded from the invention. In a further example, blends of polyesters are intended to be excluded if any one of the polyesters is not in a semicrystalline melt such as, for example, if one polyester was completely melted (i.e., calendered at a temperature greater than its melting point range) and the other was in the form of a solid suspended in the melted polymer. The following discussion provides examples of the kinds of modifications that may be employed, but those of skill in the art will readily recognize others.

The process of our novel invention is formed by a calendering process at a maximum temperature in which each of the polyesters of the film is in the form of a semicrystalline melt. The term "semicrystalline melt", as used herein, is intended to mean that the polyester exhibits both a liquid, melted phase and a solid, crystalline phase during the calendering operation. A semicrystalline, melt is present when the calendering operation is conducted at a temperature that exceeds the Tg of the polyester but is less than the upper temperature of the melting point range of the polyester such that the crystalline regions of the polymer are not completely melted. The term "melting point range", as used herein, means the range of temperature as observed in a DSC curve beginning at the onset of the melting point endotherm and ending at the completion of the melting point endotherm. The onset and completion of the melting point range for a polymer may be determined by persons of ordinary skill in the art. The beginning and end points of the melting point range of the polyesters of the invention are determined by the minimum temperature range wherein 90% of the heat of fusion of the melt is included in the range. The heat of fusion of the melt may be determined in the second heat cycle DSC using standard methods. For example, the heat of fusion and the minimum temperature range may be determined by integrating the area under the second heat cycle DSC curve using a computer and commercially available software well known to persons of ordinary skill in the art. Typically, the calendering process is conducted by carefully maintaining the calender roll temperatures such that the maximum temperature of all of the calender rolls is less than the upper temperature of the melting point range of the polyester or of each polyester if a blend of 2 or more polyesters is used. By contrast, if the temperature of the calendering process exceeds the melting point range of the polyester, the polyester will become completely melted and will not be in the form of a semicrystalline melt. If the calendering temperature is too far below the melting point range of one or more of the polyesters, the viscosity of the melt often will be too high and melt fracture of the film will occur. Typically, the process of the invention is carried out at a maximum temperature of 70 to 170°C. Further examples of maximum calendering temperatures include 80 to 160°C and 90 to 150°C.

The process of the invention may be carried out using any semicrystalline polyester including, but not limited to, biodegradable, semicrystalline polyesters. Examples of biodegradable polyesters which may be used in the present invention include, but are not limited to, one or more aliphatic-aromatic polyesters (AAPE), polycaprolactone, polylactic acid, polyhydroxybutyrate, polyhydroxybutyrate-valerate, and polybutylenesuccinate, and copolymers thereof. For example, the biodegradable polyester may comprise the residues of one or more hydroxycarboxylic acids such as, for example, lactic acid (both R and S forms and mixtures thereof), caprolactone, gamma-butyrolactones, and hydroxybutyrates.

The process of our invention may be further described and illustrated herein with particular reference to aliphatic-aromatic polyesters (abbreviated herein as "AAPE"), _ although it is understood by persons of ordinary skill in that art that other semicrystalline polyesters may be used. The AAPE may be a linear, random copolyester or a branched and/or chain extended copolyester comprising diol residues which contain the residues of one or more substituted or unsubstituted, linear or branched, diols selected from aliphatic diols containing 2 to 8 carbon atoms, polyalkylene ether glycols containing 2 to 8 carbon atoms, and cycloaliphatic diols containing 4 to 12 carbon atoms. The substituted diols, typically, will contain 1 to 4 substituents independently selected from halo, C₆-C₁₀ aryl, and C₁-C₄ alkoxy. Examples of diols which may be used include, but are not limited to, ethylene glycol, diethylene glycol, 1,3-propanediol, 2,2-dimethyl-1,3-propanediol, 1,3-butanediol, 1,4-butanediol, 1,5-pentanediol, 1,6-hexanediol, polyethylene glycol, diethylene glycol, 2,2,4-trimethyl-1,6-hexanediol, thiodiethanol, 1,3-cyclohexanedimethanol, 1,4-cyclohexanedimethanol, 2,2,4,4-tetramethyl-1,3-cyclobutanediol, triethylene glycol, and tetraethylene glycol with the preferred diols comprising one or more diols selected from 1,4-butanediol; 1,3-propanediol; ethylene glycol; 1,6-hexanediol; diethylene glycol; and 1,4-cyclohexanedimethanol.

The AAPE also may comprise diacid residues which contain 35 to 99 mole%, based on the total moles of diacid residues, of the residues of one or more substituted or unsubstituted, linear or branched, non-aromatic dicarboxylic acids selected from aliphatic dicarboxylic acids containing 2 to 12 carbon atoms and cycloaliphatic dicarboxylic acids containing 5 to 10 carbon atoms. The substituted non-aromatic dicarboxylic acids will typically contain 1 to 4 substituents selected from halo, C₆-C₁₀ aryl, and C₁-C₄ alkoxy. Non-limiting examples of aliphatic and cycloaliphatic dicarboxylic acids include malonic, succinic, glutaric, adipic, pimelic, azelaic, sebacic, fumaric, 2,2-dimethyl glutaric, suberic, 1,3-cyclopentanedicarboxylic, 1,4-cyclohexanedicarboxylic, 1,3-cyclohexanedicarboxylic, diglycolic, itaconic, maleic, and 2,5-norbomanedicarboxylic. In addition to the non-aromatic dicarboxylic acids, the AAPE comprises 1 to 65 mole%, based on the total moles of diacid residues, of the residues of one or more substituted or unsubstituted aromatic dicarboxylic acids containing 6 to 10 carbon atoms. In the case where substituted aromatic dicarboxylic acids are used, they will typically contain 1 to 4 substituents selected from halo, C₆-C₁₀ aryl, and C₁-C₄ alkoxy. Non-limiting examples of aromatic dicarboxylic acids which may be used in the AAPE of our invention are terephthalic acid, isophthalic acid, and 2,6-naphthalenedicarboxylic acid. In another embodiment, the AAPE. comprises diol residues comprising the residues of one or more of: 1,4-butanediol; 1,3-propanediol; ethylene glycol; 1,6-hexanediol; diethylene glycol; or 1,4-cyclohexanedimethanol; and diacid residues comprising (i) 35 to 95 mole%, based on the total moles of acid residues, of the residues of one or more non-aromatic dicarboxylic acids selected from glutaric acid, diglycolic acid, succinic acid, 1,4-cyclohexanedicarboxylic acid, and adipic acid; (ii) 5 to 65 mole%, based on the total moles of acid residues, of the residues of one or more aromatic dicarboxylic acids selected from terephthalic acid and isophthalic acid. More preferably, the diacid residues comprise the residues of adipic acid and terephthalic acid; and the diol residues comprise the residues of 1,4-butanediol.

Other examples of the AAPE's useful with the present invention are those prepared from the following diols and dicarboxylic acids (or copolyester-forming equivalents thereof such as diesters) in the following mole percent, based on 100 mole percent of a diacid component and 100 mole percent of a diol component:
(1) glutaric acid (30 to 75%); terephthalic acid (25 to 70%); 1,4-butanediol (90 to 100%); and modifying diol (0 10%);
(2) succinic acid (30 to 95%); terephthalic acid (5 to 70%); 1,4-butanediol (90 to 100%); and modifying diol (0 to 10%); and
(3) adipic acid (30 to 75%); terephthalic acid (25 to 70%); 1,4-butanediol (90 to 100%); and modifying diol (0 to 10%).
The modifying diol preferably is selected from 1,4-cyclohexanedimethanol, triethylene glycol, polyethylene glycol, and neopentyl glycol. The most preferred AAPE's are linear branched or chain extended copolyesters comprising 50 to 60 mole percent adipic acid residues, 40 to 50 mole percent terephthalic acid residues, and at least 95 mole percent 1,4-butanediol residues. Even more preferably, the adipic acid residues are from 55 to 60 mole percent, the terephthalic acid residues are from 40 to 45 mole percent, and the 1,4-butanediol residues are from 95 to 100 mole percent. Such compositions are commercially available under the trademark ECOFLEX^{®} polyester, available from BASF Corporation.

Additional, specific examples of preferred AAPE's include a poly(tetramethylene glutarate-co-terephthalate) containing (a) 50 mole percent glutaric acid residues, 50 mole percent terephthalic acid residues and 100 mole percent 1,4-butanediol residues, (b) 60 mole percent glutaric acid residues, 40 mole percent terephthalic acid residues and100 mole percent 1,4-butanediol residues or (c) 40 mole percent glutaric acid residues, 60 mole percent terephthalic acid residues and 100 mole percent 1,4-butanediol residues; a poly(tetramethylene succinate-co-terephthalate) containing (a) 85 mole percent succinic acid residues,15 mole percent terephthalic acid residues and 100 mole percent 1,4-butanediol residues or (b) 70 mole percent succinic acid residues, 30 mole percent terephthalic acid residues and 100 mole percent 1,4-butanediol residues; a poly(ethylene succinate-co-terephthalate) containing 70 mole percent succinic acid residues, 30 mole percent terephthalic acid residues and 100 mole percent ethylene glycol residues; and a poly(tetramethylene adipate-co-terephthalate) containing (a) 85 mole percent adipic acid residues, 15 mole percent terephthalic acid residues and 100 mole percent 1,4-butanediol residues or (b) 55 mole percent adipic acid residues, 45 mole percent terephthalic acid residues and 100 mole percent 1,4-butanediol residues.

In addition to the AAPE's described above, specific examples of biodegradable polyesters which may be used the invention are listed in Table A below and include polyhydroxyalkanoates ("PHA's") such as, for example, polyhydroxybutyrate ('THE"), polyhydroxybutyrate-co-valerate ("PHBv"), polyhydroxybutyrate-co-octanoate ("PHBO"), and polyhydroxybutyrate-co-hexanoate ("PHBHx"); polycaprolactone ("PCL"), and polylactic acid ("PLA").

**Table A**

| **Polymer Name** | **Trademark or Shorthand Name** | **Commercial Producers** | **Chemical Components (mol%)** |
|---|---|---|---|
| ECOFLEX Copolyester | ECOFLEX^{®} | BASF | Terephthalic Acid (41-46%), Adipic Acid (54-59%), Butanediol (~100%), small amount of branching glycol/acid |
| Polycaprolactone polymer | TONE^{®} 787, PCL | Dow | caprolactone (-O(CH2)5CO-) (~100%) |
| Polybutylenesuccinate | BIONOLLE^{®}, PAS, PBS | Showa Denko | Succinic Acid (~100%), Butanediol (~100%), small amount of branching glycol/acid |
| Polyhydroxybutyrate | BIOPOL^{®}, PHB | Metabolix | 4-hydroxylbutyric acid (~100%) |
| Polyhydroxybutyrate-co-valerate | BIOPOL^{®}, PHBv | Metabolix | 4-hydroxylbutyric acid & 3-hydroxyproprionic acid, predominately 4HBA |
| AAPE & Starch Blend | BIOPLAST^{®} | Biotec | 40 wt % thermoplastic starch compounded w/AAPE |
| Polylactic Acid | NATURE-WORKS^{™} | Cargill Dow LLC | Lactic Acid |

Although polyesters comprising polymers prepared from hydroxycarboxylic acids and their various derivatives (such as cyclic esters) have been described above as being made synthetically via ring opening polymerization, a number of these biodegradable polyesters can also be derived from biological processes. Specific examples of biodegradable polyesters that have been derived from biological processes described in the patent and technical literature include PHB, PHBv, PHAs, and PLA. These polyesters have been prepared via biological processes including fermentation, harvesting from plants, and generically modified plants and bacteria.

The polyester may comprise from 10 to 1,000 repeating units and preferably, from 15 to 600 repeating units. The polyester preferably also has an inherent viscosity typically within the range of 0.4 to 2.0 dL/g as measured at a temperature of 25°C using a concentration of 0.25 gram polyester in 50 ml of a 60/40 by weight solution of phenol/tetrachloroethane. Other examples of inherent viscosity ranges are 0.5 to 1.4 dL/g and 0.6 to 1.0 dL/g.

The polyester, optionally, may contain the residues of a branching agent. The weight percentage ("wt%") ranges for the branching agent are from 0 to 2 mole percent, preferably 0.1 to 1 wt%, and most preferably 0.1 to 0.5 wt% based on the total weight of the polyester. The branching agent preferably has a weight average molecular weight of 50 to 5000, more preferably 92 to 3000, and a functionality of 3 to 6. For example, the branching agent may be the esterified residue of a polyol having 3 to 6 hydroxyl groups, a polycarboxylic acid having 3 or 4 carboxyl groups (or ester-forming equivalent groups) or a hydroxy acid having a total of 3 to 6 hydroxyl and carboxyl groups.

Representative low molecular weight polyols that may be employed as branching agents include glycerol, trimethylolpropane, trimethylolethane, polyethertriols, glycerol, 1,2,4-butanetriol, pentaerythritol, 1,2,6-hexanetriol, sorbitol, 1,1,4,4,-tetrakis (hydroxymethyl) cyclohexane, tris(2-hydroxyethyl) isocyanurate, and dipentaerythritol. Examples of higher molecular weight polyols (MW 400-3000) that may be used as branching agents are triols derived by condensing alkylene oxides having 2 to 3 carbons, such as ethylene oxide and propylene oxide with polyol initiators. Representative polycarboxylic acids that may be used as branching agents include hemimellitic acid, trimellitic (1,2,4-benzenetricarboxylic) acid and anhydride, trimesic (1,3,5-benzenetricarboxylic) acid, pyromellitic acid and anhydride, benzenetetracarboxylic acid, benzophenone tetracarboxylic acid, 1,1,2,2-ethanetetracarboxylic acid, 1,1,2-ethanetricarboxylic acid, 1,3,5-pentanetricarboxylic acid, and 1,2,3,4-cyclopentanetetracarboxylic acids. Although the acids may be used as such, preferably they are used in the form of their lower alkyl esters or their cyclic anhydrides in those instance where cyclic anhydrides can be formed. Representative hydroxy acids as branching agents include malic acid, citric acid, tartaric acid, 3-hydroxyglutaric acid, mucic acid, trihydroxyglutaric acid, 4-carboxyphthalic anhydride, hydroxyisophthalic acid, and 4-(beta-hydroxyethyl)phthalic acid. Such hydroxy acids contain a combination of 3 or more hydroxyl and carboxyl groups. Especially preferred branching agents include trimellitic acid, trimesic acid, pentaerythritol, trimethylol propane and 1,2,4-butanetriol.

The polyesters also may comprise one or more ion-containing monomers to increase their melt viscosity. The ion-containing monomer may be selected from salts of sulfoisophthalic acid or a derivative thereof A typical example of this type of monomer is sodiosulfoisophthalic acid or the dimethyl ester of sodiosulfoisophthalic. Examples of concentration ranges for ion-containing monomers are 0.3 to 5.0 mole%, and 0.3 to 2.0 mole%, based on the total moles of acid residues.

One example of a branched AAPE of the present invention is poly-(tetramethylene adipate-co-terephthalate) containing 100 mole percent 1,4-butanediol residues, 43 mole percent terephthalic acid residues and 57 mole percent adipic acid residues and branched with 0.5 weight percent pentaerythritol. This AAPE may be produced by the transesterification and polycondensation of dimethyl adipate, dimethyl terephthalate, pentaerythritol and 1,4-butanediol. The AAPE may be prepared by heating the monomers at 190°C for 1 hour, 200°C for 2 hours, 210°C for 1 hour, then at 250°C. for 1.5 hours under vacuum in the presence of 100 ppm of Ti present initially as titanium tetraisopropoxide.

Another example of a branched AAPE is poly(tetramethylene adipate-co-terephthalate) containing 100 mole percent 1,4-butanediol residues, 45 mole percent terephthalic acid residues and 55 mole percent adipic acid residues and branched with 0.3 weight percent pyromellitic dianhydride. This AAPE is produced via reactive extrusion of linear poly (tetramethylene adipate-co-terephthalate) with pyromellitic dianhydride using an extruder.

The polyesters also may comprise from 0 to 5 wt%, based on the total weight of the polyester, of one or more chain extenders. Exemplary chain extenders, are divinyl ethers such as those disclosed in U.S. Patent No. 5,817,721 or diisocyanates such as, for example, those disclosed in U.S. Patent No. 6,303,677. Representative divinyl ethers are 1,4-butanediol divinyl ether, 1,5-hexanediol divinyl ether and 1,4-cyclohexandimethanol divinyl ether. Representative diisocyanates are toluene 2,4-diisocyanate, toluene 2,6-diisocyanate, 2,4'-diphenylmethane diisocyanate, naphthalene-1,5-diisocyanate, xylylene diisocyanate, hexamethylene diisocyanate, isophorone diisocyanate and methylenebis(2-isocyanatocyclohexane). The preferred diisocyanate is hexamethylene diisocyanate. The weight percent ranges are preferably 0.3 to 3.5 wt%, based on the total weight percent of the polyester, and most preferably 0.5 to 2.5 wt%. It is also possible in principle to employ trifunctional isocyanate compounds which may contain isocyanurate and/or biurea groups with a functionality of not less than three, or to replace the diisocyanate compounds partially by tri-or polyisocyanates.

The polyesters are readily prepared from the appropriate dicarboxylic acids, hydroxycarboxylic acids, lactones, esters, anhydrides, or salts, the appropriate diol or diol mixtures, and any branching agents using typical polycondensation reaction conditions. They may be made by continuous, semi-continuous, and batch modes of operation and may utilize a variety of reactor types. Examples of suitable reactor types include, but are not limited to, stirred tank, continuous stirred tank, slurry, tubular, wiped-film, falling film, or extrusion reactors. The term "continuous" as used herein means a process wherein reactants are introduced and products withdrawn simultaneously in an uninterrupted manner. By "continuous" it is meant that the process is substantially or completely continuous in operation in contrast to a "batch" process. "Continuous" is not meant in any way to prohibit normal interruptions in the continuity of the process due to, for example, start-up, reactor maintenance, or scheduled shut down periods. The term "batch" process as used herein means a process wherein all the reactants are added to the reactor and then processed according to a predetermined course of reaction during which no material is fed or removed into the reactor. The term "semicontinuous" means a process where some of the reactants are charged at the beginning of the process and the remaining reactants are fed continuously as the reaction progresses. Alternatively, a semicontinuous process may also include a process similar to a batch process in which all the reactants are added at the beginning of the process except that one or more of the products are removed continuously as the reaction progresses. For the polyesters of the present invention, the process is operated advantageously as a continuous process for economic reasons and to produce superior coloration of the polymer as the polyester may deteriorate in appearance if allowed to reside in a reactor at an elevated temperature for too long a duration.

The polyesters are prepared by procedures known to persons skilled in the art and described, for example, in U.S. Patent No. 2,012,267. These procedures are illustrated herein with particular reference to the preparation of AAPE's. The polymerization reactions are usually carried out at temperatures from 150°C to 300°C in the presence of polycondensation catalysts such as, for example, alkoxy titanium compounds, alkali metal hydroxides and alcoholates, salts of organic carboxylic acids, alkyl tin compounds, metal oxides, and the like. The catalysts are typically employed in amounts between 10 to 1000 ppm, based on total weight of the reactants.

For example, the reaction of the diol and dicarboxylic acid may be carried out using conventional polyester polymerization conditions. For example, when preparing the polyester by means of an ester interchange reaction, i.e., from the ester form of the dicarboxylic acid components, the reaction process may comprise two steps. In the first step, the diol component and the dicarboxylic acid component, such as, for example, dimethyl terephthalate, are reacted at elevated temperatures, typically, 150°C to 250°C for 0.5 to 8 hours at pressures ranging from 0.0 kPa gauge to 414 kPa gauge (60 pounds per square inch, "psig"). Preferably, the temperature for the ester interchange reaction ranges from 180°C to 230°C for 1 to 4 hours while the preferred pressure ranges from 103 kPa gauge (15 psig) to 276 kPa gauge (40 psig). Thereafter, the reaction product is heated under higher temperatures and under reduced pressure to form the polyester with the elimination of diol, which is readily volatilized under these conditions and removed from the system. This second step, or polycondensation step, is continued under higher vacuum and a temperature which generally ranges from 230°C to 350°C, preferably 250°C to 310°C and, most preferably, 260°C to 290°C for 0.1 to 6 hours, or preferably, for 0.2 to 2 hours, until a polymer having the desired degree of polymerization, as determined by inherent viscosity, is obtained. The polycondensation step may be conducted under reduced pressure which ranges from 53 kPa (400 torr) to 0.013 kPa (0.1 torr). Stirring or appropriate conditions are used in both stages to ensure adequate beat transfer and surface renewal of the reaction mixture. The reaction rates of both stages are increased by appropriate catalysts such as, for example, titanium tetrachloride, manganese diacetate, antimony oxide, dibutyl tin diacetate, zinc chloride, or combinations thereof. A three-stage manufacturing procedure, similar to that described in U.S. Patent No. 5,290,631, may also be used, particularly when a mixed monomer feed of acids and esters is employed. For example, a typical aliphatic-aromatic copolyester, poly(tetramethylene glutarate-co-terephthalate) containing 30 mole percent terephthalic acid residues, may be prepared by heating dimethyl glutarate, dimethyl terephthalate, and 1,4-butanediol first at 200°C for 1 hour then at 245°C for 0.9 hour under vacuum in the presence of 100 ppm of Ti present initially as titanium tetraisopropoxide.

To ensure that the reaction of the diol component and dicarboxylic acid component by an ester interchange reaction is driven to completion, it is sometimes desirable to employ 1.05 to 2.5 moles of diol component to one mole dicarboxylic acid component Persons of skill in the art will understand, however, that the ratio of diol component to dicarboxylic acid component is generally determined by the design of the reactor in which the reaction process occurs.

In the preparation of polyesters by direct esterification, i.e., from the acid form of the dicarboxylic acid component, the polyesters are produced by reacting the dicarboxylic acid or a mixture of dicarboxylic acids with the diol component or a mixture of diol components and, optionally, a branching monomer component. The reaction is conducted at a pressure of from 7 kPa gauge (1 psig) to 1379 kPa gauge (200 psig), preferably less than 689 kPa (100 psig) to produce a low molecular weight polyester product having an average degree of polymerization of from 1.4 to 10. The temperatures employed during the direct esterification reaction typically range from 180°C to 280C, more preferably ranging from 220°C to 270°C. This low molecular weight polymer may then be polymerized by a polycondensation reaction.

In addition to the polyester, the polyester composition comprises a release additive that is effective to prevent sticking of the polyester composition to the calendering rolls. As used herein, the term "effective" means that release additive enables the polyester composition passes freely between the calendering rolls without wrapping itself around the rolls or producing an excessive layer of polyester on the surface of the rolls. The amount of release additive used in the polyester composition is typically 0.1 to 2 wt%, based on the total weight of the polyester composition. The optimum amount of release additive used is determined by factors well known in the art and is dependent upon variations in equipment, material, process conditions, and film thickness. Additional examples of release additive levels are 0.1 to 1 wt%, 0.1 to 0.8 wt%, and 0.1 to 0.5 wt%. Examples of release additives of the present invention include fatty acid amides such as erucylamide and stearamide; metal salts of organic acids such as calcium stearate and zinc stearate; fatty acids such as stearic acid, oleic acid, and palmitic acid; fatty acid salts; fatty acid esters; hydrocarbon waxes such as paraffin wax, phosphoric acid esters, polyethylene waxes, and poly(propylene) waxes; chemically modified polyolefin waxes; ester waxes such as carnauba wax; glycerin esters such as glycerol mono- and di-stearates; talc; microcrystalline silica; acrylic copolymers (for example, PARALOID^{®} K175 available from Rohm & Haas); and combinations of one or more of the above. Typically, the additive comprises at least one compound selected from erucylamide, stearamide, calcium stearate, zinc stearate, stearic acid, montanic acid, montanic acid esters, montanic acid salts, oleic acid, palmitic acid, paraffin wax, polyethylene waxes, poly(propylene) waxes, carnauba wax, glycerol monostearate, and glycerol distearate.

Another release additive which may be used comprises a fatty acid and/or a salt of a fatty acid containing more than 18 carbon atoms and an ester wax comprising a fatty acid residue containing more than 18 carbon atoms and an alcohol residues containing from 2 to 28 carbon atoms. The ratio of the fatty acid and/or salt of a fatty acid to the ester wax may be 1:1 1 or greater. In another example, the ratio of the fatty acid and/or salt of the fatty acid to the ester wax is 2:1 or greater.

The fatty acid, for example, may comprise montanic acid and the salt of the fatty acid may comprise one or more of: the sodium salt of montanic acid, the calcium salt of montanic acid, or the lithium salt of montanic acid. In another example, the fatty acid residue of the ester wax may comprise montanic acid. The alcohol residue of the ester wax preferably contains 2 to 28 carbon atoms. Examples of alcohol residues include the residues of one or more hydroxyl compounds selected from montanyl alcohol, ethylene glycol, butylene glycol, glycerol, and pentaerythritol. The release additive also may comprise an ester wax which has been partially saponified with a base such as, for example, calcium hydroxide.

The polyester composition also may comprise a phosphorus-containing flame retardant, although the presence of a flame retardant is not critical to the invention. The phosphorus-containing flame retardant should be miscible with the polyester. The term "miscible', as used herein," is understood to mean that the flame retardant and the polyester will mix together to form a stable mixture which will not separate into multiple phases under processing conditions or conditions of use. Thus, the term "miscible" is intended to include both "soluble" mixtures, in which flame retardant and polyester form a true solution, and "compatible" mixtures, meaning that the mixture of flame retardant and polyester do not necessarily form a true solution but only a stable blend. Preferably, the phosphorus-containing compound is a non-halogenated, organic compound such as, for example, a phosphorus acid ester containing organic substituents. The flame retardant may comprise a wide range of phosphorus compounds well-known in the art such as, for example, phosphines, phosphites, phosphinites, phosphonites, phosphinates, phosphonates, phosphine oxides, and phosphates. Examples of phosphorus-containing flame retardants include tributyl phosphate, triethyl phosphate, tri-butoxyethyl phosphate, t-Butylphenyl diphenyl phosphate, 2-ethylhexyl diphenyl phosphate, ethyl dimethyl phosphate, isodecyl diphenyl phosphate, trilauryl phosphate, triphenyl phosphate, tricresyl phosphate, trixylenyl phosphate, t-butylphenyl diphenylphosphate, resorcinol bis(diphenyl phosphate), tribenzyl phosphate, phenyl ethyl phosphate, trimethyl thionophosphate, phenyl ethyl thionophosphate, dimethyl methylphosphonate, diethyl methylphosphonate, diethyl pentylphosphonate, dilauryl methylphosphonate, diphenyl methylphosphonate, dibenzyl methylphosphonate, diphenyl cresylphosphonate, dimethyl cresylphosphonate, dimethyl methylthionophosphonate, phenyl diphenylphosphinate, benzyl diphenylphosphinate, methyl diphenylphosphinate, trimethyl phosphine oxide, triphenyl phosphine oxide, tribenzyl phosphine oxide, 4-methyl diphenyl phosphine oxide, triethyl phosphite, tributyl phosphite, trilauryl phosphite, triphenyl phosphite, tribenzyl phosphite, phenyl diethyl phosphite, phenyl dimethyl phosphite, benzyl dimethyl phosphite, dimethyl methylphosphonite, diethyl pentylphosphonite, diphenyl methylphosphonite, dibenzyl methylphosphonite, dimethyl cresylphosphonite, methyl dimethylphosphinite, methyl diethylphosphinite, phenyl diphenylphosphinite, methyl diphenylphosphinite, benzyl diphenylphosphinite, triphenyl phosphine, tribenzyl phosphine, and methyl diphenyl phosphine.

The term "phosphorus acid" as used in describing the phosphorus-containing flame retardants of the invention include the mineral acids such as phosphoric acid, acids having direct carbon-to-phosphorus bonds such as the phosphonic and phosphinic acids, and partially esterified phosphorus acids which contain at least one remaining unesterified acid group such as the first and second degree esters of phosphoric acid and the like. Typical phosphorus acids that can be employed in the present invention include, but are not limited to: dibenzyl phosphoric acid, dibutyl phosphoric acid, di(2-ethylhexyl) phosphoric acid, diphenyl phosphoric acid, methyl phenyl phosphoric acid, phenyl benzyl phosphoric acid, hexylphosphonic acid, phenylphosphonic acid tolylphosphonic acid, benzylphosphonic acid, 2-phenylethylphosphonic acid, methylhexylphosphinic acid, diphenylphosphinic acid, phenylnaphthylphosphinic acid, dibenzylphosphinic acid, methylphenylphosphinic acid, phenylphosphonous acid, tolylphosphonous acid, benzylphosphonous acid, butyl phosphoric acid, 2-ethyl hexyl phosphoric acid, phenyl phosphoric acid, cresyl phosphoric acid, benzyl phosphoric acid, phenyl phosphorous acid, cresyl phosphorous acid, benzyl phosphorous acid, diphenyl phosphorous acid, phenyl benzyl phosphorous acid, dibenzyl phosphorous acid, methyl phenyl phosphorous acid, phenyl phenylphosphonic acid, tolyl methylphosphonic acid, ethyl benzylphosphonic acid, methyl ethylphosphonous acid, methyl phenylphosphonous acid, and phenyl phenylphosphonous acid. The flame retardant typically comprises at least one phosphorus-containing compound selected from monoesters, diesters, and triesters of phosphoric acid. In another example, the flame retardant comprises resorcinol bis(diphenyl phosphate), abbreviated herein as "RDP".

The flame retardant may be added to the polyester composition at a concentration of 5 wt% to 40 wt% based on the total weight of the polyester composition. Other examples of the flame retardant levels are 5 wt% to 35 wt%, 5 wt% to 30 wt%, and 5 wt% to 25 wt%.

Oxidative stabilizers also may be included in the polyester composition of the present invention to prevent oxidative degradation during processing of the molten or semi-molten material on the rolls. Such stabilizers include esters such as distearyl thiodipropionate or dilauryl thiodipropionate; phenolic stabilizers such as IRGANOX^{®} 1010 available from Ciba-Geigy AG, ETHANOX^{®} 330 available from Ethyl Corporation, and butylated hydroxytoluene; and phosphorus containing stabilizers such as IRGAFOS^{®} available from Ciba-Geigy AG and WESTON^{®} stabilizers available from GE Specialty Chemicals. These stabilizers may be used alone or in combinations.

In another aspect, our invention provides a process for film or sheet, comprising calendering a polyester composition, comprising one or more polyesters and a release additive, at a maximum temperature which is within the melting point range of each of the polyesters, and in which at least one of polyesters has a crystallization half-time from the molten state of less than 5 minutes. The various embodiments of the polyesters, such as the diacids, diols, inherent viscosities, branching monomers, chain extenders release additives, processing aids, and flame retardants are as described hereinabove for other embodiments of the invention. The term "melting point range"is as described hereinabove. The polyesters may have a crystallization half-time from the molten state of less than 5 minutes. In another example, the crystallization half-time of the polyester is less than 3 minutes. In yet another embodiment, the composition comprises an AAPE having a crystallization half-time from the molten state of less than 3 minutes. In yet another example, the process of the invention may include a polyester composition consisting essentially of a polyester having crystallization half-time from the molten state of less than 5 minutes and a release additive. As described previously, the phrase "consisting essentially of" is used herein to encompass a process in which a polyester and a release agent are calendered at a maximum temperature within the melting point range of the polyester and in which the polyester has a crystallization half time of less than 5 minutes. The phrase is understood to exclude any elements that would substantially alter the essential properties of the process to which the phrase refers. For example, the films and polyester composition of this invention may include other additives such as, for example, flame retardants, antioxidants, colorants, etc. which do not substantially alter the melting point range or change the crystallization half-time of the polyester to exceed 5 minutes during the calendering process. As described earlier, the use of additives or additional polymers which would be expected to alter the melting point range of the polyester such that the polyester is not itself within its melting point range during calendering would be excluded from the invention.

The polyester composition of our inventive process, additionally, may contain dyes, pigments, and processing aids such as, for example, fillers, matting agents, antiblocking agents, antistatic agents, blowing agents, fibers, carbon fibers, glass, impact modifiers, carbon black, talc, TiO₂ and the like as desired. Colorants, sometimes referred to as toners, may be added to impart a desired neutral hue and/or brightness to the polyester and the calendered product. Preferably, the polyester compositions also may comprise 0 to 30 wt% of one or more processing aids, in addition to the release additive, to alter the surface properties of the composition and/or to enhance flow. Representative examples of processing aids include calcium carbonate, talc, clay, mica, wollastonite, kaolin, diatomaceous earth, TiO₂, NH₄Cl, silica, calcium oxide, sodium sulfate, and calcium phosphate. Further examples of processing aid levels within the polyester composition of the instant invention are 5 to 25 wt% and 10 to 20 wt%. Preferably, the processing aid is also a biodegradation accelerant, that is, the processing aid increases or accelerates the rate of biodegradation in the environment. We have discovered that processing aids that also may function to alter the pH of the composting environment such as, for example, calcium carbonate, calcium hydroxide, calcium oxide, barium oxide, barium hydroxide, sodium silicate, calcium phosphate, magnesium oxide, and the like may also accelerate the biodegradation process. For the present invention, the preferred processing aid is calcium carbonate.

The film or sheet from the process of the invention may exhibit high clarity. In addition, the calendered film or sheet from our process may develop unexpectedly high strength and toughness in comparison to films having identical compositions produced by conventional extrusion or melt-blowing processes. The calendered films also can exhibit improved thermal properties and strength over melt-cast films having substantially the same composition. For example, the -calendered films of the invention can have a higher thermal resistance than a melt cast film of substantially the same composition. By "higher thermal resistance, it is meant that the calendered film has a higher peak melting temperature than a melt cast film having substantially the same composition. The term "higher peak melting temperature", as used herein, means that the calendered film exhibits a second melting point peak within its melting point range at a temperature that is greater than the peak melting point temperature of a melt cast film having substantially the same composition. The presence of a second, higher peak melting point in the calendered films of the invention is indicative of the presence of a second, higher melting crystalline phase within the film that enhances its thermal resistance.

Conventional calendering processes and equipment may be used to calender the polyester composition. In the process of the invention, polyester composition comprises a semicrystalline molten form and is passed through a compressive nip between at least two calendering rolls at temperatures of 80°C to 200°C. Typically, the polyester is blended with the release additive, flame retardants, and other components. The mixed ingredients are blended and softened in a kneader or extruder. Through heat, shearing, and pressure, the dry powders are fused to form a homogeneous, molten material. The extruder can feed the molten material in a continuous process to the top of the calendering section of the calendering line in between first and second heated calender rolls. Typically, four rolls are used to form three nips or gaps. For example, the rolls may be configured in an "L" shape, an inverted "L" shape", or a "Z" configuration. The rolls vary in size to accommodate different film widths. The rolls have separate temperature and speed controls. The material proceeds through the nip between the first two rolls, referred to as the feed nip. The rolls rotate in opposite directions to help spread the material across the width of the rolls. The material winds between the first and second, second and third, third and fourth rolls, etc. The gap between rolls decreases in thickness between each of the rolls such that the material is thinned between the sets of rolls as it proceeds. The resulting film or sheet, therefore, has a uniform thickness that is produced by passing the polyester composition through the compressive nips between the heated rolls. In effect, the polyester composition is squeezed between the nips which separate the rolls. Each successive nip between the calendering rolls reduces the film thickness until the final film or sheet gauge is obtained.

Typical maximum processing temperatures for the rolls will generally range from 80°C to 200°C, preferably 80°C to 160°C, and more preferably 90°C to 150°C. For some hydrolytically unstable polyesters, predrying the polyester resin composition or venting excess moisture during processing is desirable to prevent polymer degradation by hydrolysis. After passing through the calender section, the material moves through another series of rolls where it may be stretched and gradually cooled to form a film or sheet. The material also may be embossed or annealed before cooling. The cooled material is then wound onto master rolls. General descriptions of calendering processes are disclosed in Jim Butschli, Packaging World, p. 26-28, June 1997 and W.V. Titow, PVC Technology, 4th Edition, pp 803-848 (1984), Elsevier Publishing Co.

The temperature of the polymer melt as it passes through the calendering rolls, sometimes referred to as the polymer melt probe temperature or the polymer melt temperature, typically is the maximum temperature experienced by the polymer as it passes through the calender rolls and is often measured by a temperature probe or infrared sensor. The temperature is typically controlled carefully in order to achieve calendering. The melt temperature is normally controlled by controlling a combination of the frictional heat and the direct heat transfer to the polymer. Frictional heat is a function of the polymer melt viscosity and the calendering roll spin rate (usually measured in revolutions per minute or RPM). Direct heat transfer to the polymer is normally accomplished by using heated calendering rolls or by preheating the polymer fed to the rolls.

It is advantageous to customize the polymer melt temperature for each polymer. Without wishing to be bound by theory, calendering occurs smoothly when the polymer melt temperature (or the maximum temperature experienced by the polyester composition during the calendering process) reaches a point or range where there is a balance between melted and unmelted (crystallites) polyesters in the melt. This temperature is below of the upper temperature of the melting point range of the polyester or, if more than one polyesters are present, below the upper temperature of the melting point range of each of the polyesters of the composition. Preferably, the maximum temperature is within the melting point range of the polyester or each polyester of the composition if more than one polyester is present. This balance can achieve useful ranges of melt strength and crystallization rates by maintaining a small fraction of the polyester in the solid (unmelted) form. This fraction potentially provides thermally reversible crosslinks, which enhance (increase) the normally low melt strengths of some polyesters such as, for example, some biodegradable polyesters. Further, this fraction potentially increases the rate of crystallization (by providing pre-formed nucleation sites), which potentially reduces out-feed roll sticking problems and provides the thermally perfected (annealed) crystalline regions seen in the final films. The crystalline regions enhance the thermal resistance of the final films.

Once the polymer melt reaches a calenderable temperature, it is desirable to maintain the polymer melt within ±15°C of that temperature, preferably within ±10°C of that temperature, or more preferably within ±5°C of that temperature. Preferably, the polymer melt probe temperature ranges from 80°C to 160°C, and the calender roll temperature ranges from 80°C to 130°C. The combination of controlling the polymer melt temperature and adding the above-mentioned release additive enables the calendering of semicrystalline polyesters.

A polyester composition for calendering may comprise:
(A) at least 50 weight percent (wt%), based on the total weight of said composition, of an AAPE, comprising
   (i) diol residues comprising the residues of one or more substituted or unsubstituted, linear or branched, diols selected from the group consisting of aliphatic diols containing 2 to 8 carbon atoms, polyalkylene ether glycols containing 2 to 8 carbon atoms, and cycloaliphatic diols containing 4 to 12 carbon atoms, wherein said substituted diols contain 1 to 4 substituents independently selected from halogen, C₆-C₁₀ aryl, and C₁-C₄ alkoxy; and
   (ii) diacid residues comprising
      (a) 35 to 99 mole%, based on the total moles of diacid residues, of the residues of one or more substituted or unsubstituted, linear or branched, non-aromatic dicarboxylic acids selected from the group consisting of aliphatic dicarboxylic acids containing 2 to 12 carbon atoms and cycloaliphatic dicarboxylic acids containing 5 to 10 carbon atoms, wherein said substituted non-aromatic dicarboxylic acids contain 1 to 4 substituents selected from halogen, C₆-C₁₀ aryl, and C₁-C₄ alkoxy; and
      (b) 1 to 65 mole%, based on the total moles of diacid residues, of the residues of one or more substituted or unsubstituted aromatic dicarboxylic acids containing 6 to 10 carbon atoms, wherein said substituted aromatic dicarboxylic acids contain 1 to 4 substituents selected from halogen, C₆-C₁₀ aryl, and C₁-C₄ alkoxy,
   wherein said AAPE is a random copolymer having a crystallization half-time from the molten state of less than 5 minutes; and
(B) 0:1 wt% to 2 wt%, based on the total weight of said composition, of at least one release additive selected from the group consisting of fatty acid amides, metal salts of organic acids, fatty acids, fatty acid salts, fatty acid esters, hydrocarbon waxes, ester waxes, phosphoric acid esters, chemically modified polyolefin waxes; glycerin esters, and acrylic copolymers.
   As noted previously, the polyester is sufficiently flexible such that the addition of a plasticizer is not required for calendering. Thus, in one example of the invention, the polyester is substantially free of plasticizer.

The composition is understood to encompass the various embodiments such as the diacids, diols, inherent viscosities, branching monomers, chain extenders release additives, processing aids, and flame retardants as described hereinabove. For example, the diol residues may comprise the residues of 1,4-butanediol and the diacid residues may comprise the residues of adipic acid and terephthalic acid. In another example, the AAPE is a linear, branched, or chain extended polyester comprising 50 to 60 mole percent adipic acid residues, 40 to 50 mole percent terephthalic acid residues, and at least 95 mole percent 1,4-butanediol residues. In a further example, the AAPE of our novel composition is substantially free of sulfonate groups, meaning that the polyester does not contain any sulfonated aromatic residues intentionally added to the AAPE that would be expected to materially affect the physical properties of the polyester. The AAPE's of our invention typically have a crystallization half time from a molten state of less than 5 minutes. Additional examples of crystallization half times are less than 4 minutes and less than 3 minutes.

The AAPE's are biodegradable and may contain biodegradable additives to enhance their disintegration and biodegradability in the environment. Representative examples of the biodegradable additives which may be included in the polyester compositions of this invention include microcrystalline cellulose, polyvinyl alcohol, thermoplastic starch, other carbohydrates, and combinations thereof For example, in addition to the AAPE; the polyester composition may comprise 1 to 40 wt%, based on the total weight of the composition, of at least one biodegradable additive selected from thermoplastic starch, microcrystalline cellulose, and polyvinyl alcohol. In another example, the polyester composition may comprise 1 to 30 wt% of a biodegradable additive. Other examples of biodegradable additive levels are 5 to 25 wt% and 10 to 20 wt%. The biodegradable additive may be a thermoplastic starch. A thermoplastic starch is a starch that has been gelatinized by extrusion cooking to impart a disorganized crystalline structure. As used herein, thermoplastic starch is intended to include "destructured starch" as well as "gelatinized starch", as described, for example, in Bastioli, C. Degradable Polymers, 1995, Chapman & Hall: London, pages 112-137. By gelatinized, it is meant that the starch granules are sufficiently swollen and disrupted that they form a smooth viscous dispersion in the water. Gelatinization is effected by any known procedure such as heating in the presence of water or an aqueous solution at temperatures of 60°C. The presence of strong alkali is known to facilitate this process. The thermoplastic starch may be prepared from any unmodified starch from cereal grains or root crops such as corn, wheat, rice, potato, and tapioca, from the amylose and amylopectin components of starch, from modified starch products such as partially depolymerized starches and derivatized starches, and also from starch graft copolymers. Thermoplastic starches are commercially available from National Starch Company.

One effect of such additives is to increase the biodegradability of the polyester composition and to compensate for reduced biodegradability resulting from high concentrations of various additives. By the term "biodegradable", as used herein in reference to the polyesters, polyester compositions, film and sheet, flame retardants, and additives of the present invention, means that polyester compositions, film, and sheet of this invention are degraded under environmental influences in an appropriate and demonstrable time span as defined, for example, by ASTM Standard Method, D6340-98, entitled "Standard Test Methods for Determining Aerobic Biodegradation of Radiolabeled Plastic Materials in an Aqueous or Compost Environment" or, alternatively, by DIN Method 54900. The polyester, composition, film and sheet, are initially reduced in molecular weight in the environment by the action of heat, water, air, microbes and other factors. This reduction in molecular weight results in a loss of physical properties (film strength) and often in film breakage. Once the molecular weight of the biodegradable polyester is sufficiently low, the monomers and oligomers are then assimilated by the microbes. In an aerobic environment, these monomers or oligomers are ultimately oxidized to CO₂, H₂O, and new cell biomass. In an anaerobic environment, the monomers or oligomers are ultimately converted to CO₂, H₂, acetate, methane, and cell biomass. Successful biodegradation requires that direct physical contact must be established between the biodegradable material and the active microbial population or the enzymes produced by the active microbial population. An active microbial population useful for degrading the films, sheets, polyesters, and polyester compositions of the invention can generally be obtained from any municipal or industrial wastewater treatment facility or composting facility. Moreover, successful biodegradation requires that certain minimal physical and chemical requirements be met such as suitable pH, temperature, oxygen concentration, proper nutrients, and moisture level.

In addition to a biodegradable additive, the polyester composition may further comprise 0 to 30 wt% of one or more processing aids such as, for example, calcium carbonate, talc, clay, mica, wollastonite, kaolin, diatomaceous earth, TiO₂ NH₄Cl, silica, calcium oxide, sodium sulfate, and calcium phosphate. The processing aid may also be a biodegradation accelerant. As previously described, calcium carbonate is one example of a processing aid that is also a biodegradation accelerant

A polyester composition for calendering may also comprise:
(A) at least 50 weight percent (wt%), based on the total weight of the composition, of an AAPE, comprising
   (i) diol residues comprising the residues of one or more of 1,4-butanediol; 1,3-propanediol; ethylene glycol; 1,6-hexanediol; diethylene glycol; or 1,4-cyclohexanedimethanol; and
   (ii) diacid residues comprising
      (a) 35 to 95 mole%, based on the total moles of diacid residues, of the residues of one or more non-aromatic dicarboxylic acids selected from the group consisting of glutaric acid, diglycolic acid, succinic acid, 1,4-cyclohexanedicarboxylic acid, and adipic acid; and
      (b) 5 to 65 mole%, based on the total moles of diacid residues, of the residues of one or more aromatic dicarboxylic acids selected from the group consisting of terephthalic acid and isophthalic acid;
   wherein the AAPE is a random copolymer having a crystallization half-time from the molten state of less than 5 minutes and is substantially free of sulfonate groups; and
(B) 0.1 wt% to 1 wt%, based on the total weight of said composition, of at least one release additive selected from the group consisting of fatty acid amides, metal salts of organic acids, fatty acids, fatty acid salts, fatty acid esters, hydrocarbon waxes, ester waxes, phosphoric acid esters, chemically modified polyolefin waxes; glycerin esters, talc, and acrylic copolymers.
The polyester composition may include the various embodiments of the diacids, diols, inherent viscosities, branching monomers, chain extenders, release additives, biodegradable additives, processing aids, and flame retardants that have been described and exemplified hereinabove. For example, diol residues of the AAPE may comprise the residues of 1,4-butanediol and the diacid residues may comprise the residues of adipic acid and terephthalic acid. In another example, the polyester composition may comprise 0.1 wt% to 1 wt% of a release additive, based on the total weight of the composition. Other representative levels of release additive that may be present in the polyester composition include 0.1 to 0.8 wt% and 0.1 to 0.5 wt%. In addition, the polyester composition does not require the use of a plasticizer for calendering and, hence, may be substantially free of plasticizer as described previously.

The various components of the polyester composition such as, for example, the flame retardant, release additive, other processing aids, and toners, may be blended in batch, semicontinuous, or continuous processes. Small scale batches may be readily prepared in any high-intensity mixing devices well-known to those skilled in the art, such as Banbury mixers, prior to calendering. The components also may be blended in solution in an appropriate solvent. The melt blending method includes blending the copolyester, additive, and any additional non-polymerized components at a temperature sufficient to convert the polyesters present into a semicrystalline melt. The blend may be cooled and pelletized for further use or the melt blend can be calendered directly from this molten blend into film or sheet. The term "melt" as used herein means a composition in which the polyester is in the form of a semicrystalline melt. For melt mixing methods generally known in the polymer art, see "Mixing and Compounding of Polymers." (I. Manas-Zloczower & Z. Tadmor editors, Carl Hanser Verlag Publisher, 1994, New York, N. Y.). When colored sheet or film is desired, pigments or colorants may be included in the polyester composition during the reaction of the diol and the dicarboxylic acid or they may be melt blended with the preformed copolyester. A preferred method of including colorants is to use a colorant having thermally stable organic colored compounds having reactive groups such that the colorant is copolymerized and incorporated into the polyester to improve its hue. For example, colorants such as dyes possessing reactive hydroxyl and/or carboxyl groups, including, but not limited to, blue and red substituted anthraquinones, may be copolymerized into the polymer chain. When dyes are employed as colorants, they may be added to the polyester reaction process after an ester interchange or direct esterification reaction.

The invention is further illustrated and described by the following examples.

### EXAMPLES

*Examples 1-10.* Several aliphatic-aromatic polyester compositions were prepared using AAPE's containing a mixture of adipic acid and terephthalic acid as the diacid components and 100 mole% 1,4-butanediol as the diol component. Melting point ranges are as defined hereinabove and were estimated from the DSC curves obtained at a heating rate of 20°C/min. The AAPE of Examples 1-4 had an melting point range of 70 - 130°C and a crystallization half-time of 0.6 minutes. Examples 5 and 7 shown in Table 1 had an melting point range of 70 - 135°C. Examples 8 and 9 had an melting point range of 60 - 135°C and a crystallization half time of 0.7 minutes. Mole percentages of adipic and terephthalic acids and process conditions are given in Table I. The films were prepared on a Dr. Collin instrumented two roll mill. The AAPE pellets were mixed with 0.9 wt% of a wax release agent (a 1:1 blend, by weight, of LICOWAX^{®} S montanic acid (available from Clariant Corporation) and LICOWAX^{®} OP (a butylene glycol ester of montanic acid that has been partially saponified with calcium hydroxide, available from Clariant Corporation) were added directly to the heated rolls and processed into a semicrystalline melt. The processing roll set point temperature was varied from 95 to 145°C as needed to produce an optimum operating conditions and the best quality film. The film was much clearer in comparison to film of identical composition processed by extrusion (Example 10). In addition, the calendered film was tougher and could not be easily punctured (such as, for example, by pushing a thumb through the film) in comparison to extrusion-processed material that is easily punctured. The physical properties of the films are provided in Tables II and III. The heading "Roll Temp" is the roll temperature set point for the calendering mill. The terms "Tg" is the glass transition temperature of the calendered film. The term "Tc" is the crystallization temperature of the polymer. "Tml" and "Tm2" are the peak melting points for the films; Tm2 is the second peak melting point which was observed in the calendered films and was not present in the melt cast film. For some of the thermal data, 2 values are shown and indicate the values observed for the same film using 2 heating cycles.

**Table I**

| **Process Conditions** | | | | | |
|---|---|---|---|---|---|
| **Example** | **Resin** **(% adipic, %terephthalic)** | **Process** | **Roll Gap,** **mm** | **Roll** **Temp °C** | **Melt** **Temp °C** |
| 1 | 56.5,43.5 | Calendered | 0.25 | 95 | 105 |
| 2 | 56.5,43.5 | Calendered | 0.2 | 100 | 105 |
| 3 | 56.5,43.5 | Calendered | 0.15 | 100 | 110 |
| 4 | 56.5,43.5 | Calendered | 0.15 | 100 | 110 |
| 5 | 54.5,45.5 + 40% starch | Calendered | 0.25 | 102 | 130 |
| 6 | 40,60 | Calendered | 0.2 | 145 | |
| 7 | 54.5.45.5 | Calendered | 0.3 | 102 | 126 |
| 8 | 55.3,44.7 | Calendered | 0.3 | 110 | 124 |
| 9 | 55.3,44.7 | Calendered | 0.15 | 110 | 130 |
| 10 | 54,5, 45.5 + 10wt% Talc | Melt Cast | | | |

**Table II**

| **Physical Properties of Calendered Films** | | | | | | | | |
|---|---|---|---|---|---|---|---|---|
| **Example** | **Thickness** **(0.001 inch)** | **Film Test Direction** | **Young Mod** **[psi]** | **Yield Strain** **[%]** | **Yield Stress** **[psi]** | **Break Strain** **[%]** | **Break Stress** **[psi]** | **Energy/Vol @Break** **[lb/in²)** |
| 1 | 0.01797 | MD | 5605 | 35.3 | 895 | 952 | 2190 | 1258 |
| | 0.01604 | TD | 6483 | 32.0 | 897 | 908 | 2113 | 1122 |
| 2 | 0.01208 | MD | 5581 | 25.8 | 636 | 429 | 1191 | 324 |
| | 0.01220 | TD | 5770 | 40.5 | 636 | 667 | 1453 | 555 |
| 3 | 0.00714 | MD | 7376 | 26.0 | 917 | 549 | 2015 | 731 |
| | 0.00909 | TD | 6091 | 50.5 | 603 | 464 | 1103 | 326 |
| 4 | 0.00569 | MD | 8330 | 24.0 | 955 | 922 | 2994 | 1397 |
| | 0.00591 | TD | 9073 | 21.0 | 968 | 819 | 2448 | 1082 |
| 5 | 0.01011 | MD | 22412 | 20.8 | 1414 | 462 | 1915 | 627 |
| | 0.01072 | TD | 20223 | 16.8 | 1076 | 517 | 1414 | 500 |
| 6 | 0.00896 | MD | 26568 | 18.9 | 1911 | 389 | 2295 | 657 |
| | 0.00832 | TD | 27433 | 20.9 | 1973 | 139 | 1947 | 221 |
| 7 | 0.0066 | MD | 9095 | 21.9 | 948 | 884 | 3847 | 1429 |
| | 0.00857 | TD | 10742 | 28.0 | 1110 | 773 | 2988 | 1164 |
| 8 | 0.00626 | MD | 9116 | 21.9 | 958 | 922 | 4059 | 1518 |
| | 0.00708 | TD | 9257 | 16.8 | 745 | 817 | 2393 | 902 |
| 9 | 0.00857 | MD | 10742 | 28.0 | 1110 | 773 | 2988 | 1164 |
| | 0.00978 | TD | 9275 | 18.0 | 921 | 891 | 3112 | 1255 |
| 10 | 0.01042 | MD | 19377 | 18.5 | 1183 | 986 | 3533 | 1605 |
| | 0.01007 | TD | 17611 | 16.0 | 1151 | 884 | 2986 | 1287 |

**Table III**

| **Additional Physical Properties of Calendered Films** | | | | | | | | | | | |
|---|---|---|---|---|---|---|---|---|---|---|---|
| **Example** | **Thickness** **[in]** | **Gloss** **(60°)** | **Haze** **(%)** | **Heat Cycle** | **Tg °C** | **Tc °C** | **Heat of fusion Tc** **(cal/g)** | **Tm1** **°C** | **Heat of fusion Tm1** **(cal/g)** | **Tm2** **°C** | **Heat of fusion Tm2** **(cal/g)** |
| 1 | 0.01797 | 67.4 | 16.4 | 1 | -37.5 | 51.2 | 1.2 | 96.8 | 4.8 | 120 | 0.93 |
| | 0.01604 | | | 2 | -36.1 | 66.1 | | 112.6 | | | |
| 2 | 0.01208 | 20 | 47 | 1 | -35.5 | 47.6 | 1.3 | 103.1 | 5.1 | 123.9 | 0.94 |
| | 0.01220 | | | 2 | -32.9 | 61.8 | | 117 | | | |
| 3 | 0.00714 | 14.2 | 29.2 | 1 | -35.4 | 49.8 | 1.2 | 100.6 | 6 | 123.1 | 0.9 |
| | 0.00909 | | | 2 | -34.3 | 63.4 | | 112.7 | | | |
| 4 | 0.00569 | 57.1 | 8.8 | 1 | -36.9 | 49 | 1.4 | 103 | 5.2 | 123.1 | 1.2 |
| | 0.00591 | | | 2 | -34.7 | 63.3 | 1.9 | 110.8 | 4.7 | | |
| 5 | 0.01011 | 18.8 | 41.9 | 1 | -33.3 | 54.7 | | 106.5 | | 137-180 | noisy |
| | 0.01072 . | | | 2 | -34.2 | 44.4 | | 114.1 | | | |
| 6 | 0.00896 | 65.6 | 19 | 1 | -23.0 | 47.7,79.3 | 2.1,2.4 | 132 | 6.1 | 155.9 | 4.1 |
| | 0.00832 | | | 2 | -21.8 | 83.1 | | 117 | | 153 | |
| 7 | 0.00660 | 24.2 | 27.9 | 1 | -32.2 | 51.1 | 1 | 109.4 | 6.1 | | |
| | 0.00857 | | | 2 | -32.9 | 49.8 | | 109.6 | | | |
| 8 | 0.00626 | 37.1 | 27.5 | 1 | 33.5 | 50.8 | 1.4 | 102.7 | 6.9 | | |
| | 0.00708 | | | 2 | -32.9 | 54 | 1.8 | 109.2 | 5.4 | | |
| 9 | 0.00857 | 63 | 18.1 | 1 | -32.6 | 50.6 | 1.6 | 110.8 | 6.4 | | |
| | 0.00978 | | | 2 | -32.3 | 59.2 | 1.4 | 112.8 | 4.7 | | |
| 10 | 0.01042 | 27.6 | 83.5 | 1 | -33. 1 | 51.2 | | 112.8 | 5.93 | | |
| | 0.01007 | | | 2 | -33.6 | | | 120.2 | | | |

*Examples 11 -15.* Several blends containing polylactic acid (melting point range of 125 -170°C and a crystallization half time of 26.3 minutes), the AGAPE, and the release agent ("RA") of Example 1 were prepared and calendered according to the procedure described in Examples 1-10 to give films. The compositions (in weight percent) and calendering conditions are given in Table IV. The film of Example 11 was clear; Examples 12-18 showed increasing haze and flexibility as the wt% of AAPE was increased. The film of Example 14 exhibited some melt fracture as the result of the lower roll temperature set point. Some sticking of the film to the calender rolls was observed in Example 17. The film of Example 19 was very flexible and showed lower opacity than the film of Example 18.

**Table IV**

| **Example** | **PLA/AAPE/RA. (wt%)** | **Roll Gap (mm)** | **Roll Temp (°C)** |
|---|---|---|---|
| 11 | 100/0/0.3 | 0.2 mm | 150°C |
| 12 | 90/10/0.4 | 0.2mm | 150°C |
| 13 | 80/20/0.4 | 0.2 mm | 150°C |
| 14 | 70/30/0.4 | 0.2 mm | 140 |
| 15 | 70/30/0.4 | 0.2 mm | 145 |
| 16 | 60/40/0.4 | 0.2 mm | 145 |
| 17 | 50/50/0.4 | 0.2 mm | 140 |
| 18 | 50/50/0.5 | 0.2 mm | 145 |
| 19 | 40/60/0.4 - 0.5 | 0.2mm | 140 |

## Claims

1. A process for forming a film or sheet, comprising calendering a polyester composition, said composition comprising one or more semicrystalline aliphatic-aromatic polyesters (AAPE), having a crystallization half-time from the molten state of less than 5 minutes, and a release additive, at a maximum temperature below the upper temperature of the melting point range of each of said one or more polyesters, such that the polymer melt probe temperature ranges from 80 °C to 160 °C, wherein said AAPE is a random copolyester comprising
(A) diol residues comprising the residues of one or more substituted or unsubstituted, linear or branched, diols selected from the group consisting of aliphatic diols containing 2 to 8 carbon atoms, polyalkylene ether glycols containing 2 to 8 carbon atoms, and cycloaliphatic diols containing 4 to 12 carbon atoms, wherein said substituted diols contain 1 to 4 substituents independently selected from halogen,C₆-C₁₀ aryl, and C₁-C₄ alkoxy; and
(B) diacid residues comprising
(i) 35 to 99 mole%, based on the total moles of diacid residues, of the residues of one or more substituted or unsubstituted, linear or branched, non-aromatic dicarboxylic acids selected from the group consisting of aliphatic dicarboxylic acids containing 2 to 12 carbon atoms and cycloaliphatic dicarboxylic acids containing 5 to 10 carbon atoms, wherein said substituted non-aromatic dicarboxylic acids contain 1 to 4 substituents selected from halogen, C₆-C₁₀ aryl, and C₁-C₄ alkoxy; and
(ii) 1 to 65 mole%, based on the total moles of diacid residues, of the residues of one or more substituted or unsubstituted aromatic dicarboxylic acids containing 6 to 10 carbon atoms, wherein said substituted aromatic dicarboxylic acids contain 1 to 4 substituents selected from halogen, C₆-C₁₀ aryl, and C₁ C₄ alkoxy.

2. The process according to claim 1 wherein said polyester composition consists essentially of a polyester and a release additive.

3. The process according to claim 1 wherein said polyester composition is substantially free of plasticizer.

4. The process according to claim 3 wherein said maximum temperature is within the melting point range of each of said one or more polyesters.

5. The process according to claim 3 wherein said one or more polyesters are biodegradable.

6. The process according to claim 1 wherein said maximum temperature is from 70 to 170 °C.

7. The process according to claims 6 wherein said non-aromatic dicarboxylic acids are selected from the group consisting of glutaric acid, diglycolic acid, succinic acid, adipic acid, and 1,4-cyclohexanedicarboxylic acid; and said aromatic dicarboxylic acids are selected from the group consisting of terephthalic acid, isophthalic acid, and 2,6-naphthalenedicarboxylic acid.

8. The process according to claim 7 wherein said diols are selected from the group consisting of 1,4-butanediol; 1,3-propanediol; ethylene glycol; 1,6-hexanediol; diethylene glycol; and 1,4-cyclohexanedimethanol.

9. The process according to claim 8 wherein said diacid residues comprise the residues of adipic acid and terephthalic acid; said diol residues comprise the residues of 1,4-butanediol; and said AAPE has a crystallization half-time from the molten state of less than 3 minutes.

10. The process according to claim 9 wherein said maximum temperature is from 90 to 150 °C and is the melting point range of said AAPE.

11. The process according to claim 1 wherein said one or more polyesters further comprise 0 to 2 weight percent, based on the total weight of said one or more polyesters, of the residues of one or more branching agents selected from the group consisting of glycerol, trimethylolpropane, trimethylolethane, polyethertriols, glycerol, 1,2,4-butanetriol, pentaerythritol, 1,2,6-hexanetriol, sorbitol, 1,1,4,4,-tetrakis (hydroxymethyl) cyclohexane, tris(2-hydroxyethyl)isocyanurate, dipentaerythritol, tartaric acid, citric acid, malic acid, trimesic acid, trimellitic acid, trimellitic anhydride, pyromellitic acid, pyromellitic anhydride, 4-carboxyphthalic anhydride, and hydroxyisophthalicacid; and 0 to 5 weight percent, based on the total weight of said one or more polyesters, of one or more chain extenders selected the group consisting of toluene 2,4-diisocyanate, toluene 2,6-diisocyanate, 2,4'-diphenylmethane diisocyanate, naphthalene- 1,5-diisocynate, xylylene diisocynate, hexamethylene diisocynate, isophorone diisocyanate and methylenebis(2-iso-cyanatocyclohexane), 1,4-butanediol divinyl ether, 1,5-hexanediol divinyl ether and 1,4-cyclohexanedimethanol divinyl ether.

12. The process according to claim 1 wherein said release additive is 0.1 wt% to 2 wt% of the total weight of said composition and comprises at least one compound selected from the group consisting of fatty acid amides, metal salts of organic acids, fatty acids, fatty acid salts, fatty acid esters, hydrocarbon waxes, ester waxes, phosphoric acid esters, chemically modified polyolefin waxes, glycerin esters, talc, and acrylic copolymers.

13. The process according to claim 12 wherein said release additive comprises at least one compound selected from the group consisting of erucylamide,stearamide, calcium stearate, zinc stearate, stearic acid, montanic acid, montanic acid esters, montanic acid salts, oleic acid, palmitic acid, paraffin wax, polyethylene waxes, poly (propylene) waxes, carnauba wax, glycerol monostearate, and glycerol distearate.

14. The process according to claim 12 wherein said release additive comprises (i) a fatty acid or a salt of a fatty acid containing more than 18 carbon atoms and (ii) an ester wax comprising a fatty acid residue containing more than 18 carbon atoms and an alcohol residue containing from 2 to 28 carbon atoms, wherein the ratio of said fatty acid or said salt of a fatty acid to said ester wax is 1:1 or greater.

15. The process according to claim 14 wherein said fatty acid comprises montanic acid; said salt of a fatty acid comprises one or more acid salts selected from the group consisting of the sodium salt of montanic acid, the calcium salt of montanic acid, and the lithium salt of montanic acid; and said fatty acid residue of said ester wax comprises montanic acid.

16. The process according to claim 15 wherein said alcohol residue of said ester wax comprises the residues of one or more hydroxyl compounds selected from the group consisting of montanyl alcohol, ethylene glycol, butylene glycol, glycerol and pentaerythritol.

17. The process according to claim 1 wherein said composition further comprises 5 to 40 wt%, based on the total weight of said composition, of at least one flame retardant selected from the group consisting of monoesters, diesters, and triesters of phosphoric acid wherein said flame retardant is miscible with at least one of said one or more polyesters.

18. The process according to claim 17 wherein said flame retardant comprises resorcinol bis(diphenyl phosphate).

## Patentansprüche

1. Verfahren zur Bildung eines Films oder einer Folie, umfassend Kalandrierung einer Polyesterzusammensetzung, wobei die genannte Zusammensetzung einen oder mehrere halbkristalline, aliphatisch-aromatische Polyester (AAPE) mit einer Kristallisationshalbzeit aus dem geschmolzenem Zustand von weniger als 5 Minuten und ein Freigabe-Additiv umfasst, bei einer maximalen Temperatur unterhalb der oberen Temperatur des Schmelzpunktbereichs jedes der genannten einen oder mehreren Polyester, so dass die Prüftemperatur der Polymerschmelze im Bereich von 80 °C bis 160 °C liegt, wobei der genannte AAPE ein statistischer Copolyester ist, umfassend
(A) Diol-Reste, umfassend die Reste eines oder mehrerer substituierter oder unsubstituierter, geradkettiger oder verzweigter Diole, die ausgewählt aus der Gruppe sind, die aus aliphatischen Diolen mit 2 bis 8 Kohlenstoffatomen, Polyalkylenetherglykolen mit 2 bis 8 Kohlenstoffatomen, und cycloaliphatischen Diolen mit 4 bis 12 Kohlenstoffatomen besteht, wobei die genannten substituierten Diole 1 bis 4 Substituenten enthalten, die unabhängig voneinander aus Halogen, C₆-C₁₀ Aryl- und C₁-C₄-Alkoxy- ausgewählt sind; und
(B) Disäure-Reste, umfassend
(i) 35 bis 99 Mol-%, bezogen auf die gesamt Mole der Disäure-Reste, einer oder mehrerer substituierter oder unsubstituierter, geradkettiger oder verzweigter, nicht-aromatischer Dicarbonsäuren, ausgewählt aus der Gruppe, die aus aliphatischen Dicarbonsäuren mit 2 bis 12 Kohlenstoffatomen und cycloaliphatischen Dicarbonsäuren mit 5 bis 10 Kohlenstoffatomen besteht, wobei die genannten substituierten nicht-aromatischen Dicarbonsäuren 1 bis 4 Substituenten enthalten, die unabhängig voneinander aus Halogen, C₆-C₁₀ Aryl- und C₁-C₄-Alkoxy-ausgewählt sind; und
(ii) 1 bis 65 Mol-%, bezogen auf die gesamt Mole der Disäure-Reste, der Reste einer oder mehrerer substituierter oder unsubstituierter aromatischer Dicarbonsäuren mit 6 bis 10 Kohlenstoffatomen, wobei die genannten substituierten aromatischen Dicarbonsäuren 1 bis 4 Substituenten enthalten, die unabhängig voneinander aus Halogen, C₆-C₁₀ Aryl- und C₁-C₄-Alkoxy- ausgewählt sind.

2. Verfahren nach Anspruch 1, wobei die genannte Polyesterzusammensetzung im Wesentlichen aus einem Polyester und einem Freigabe-Additiv besteht.

3. Verfahren nach Anspruch 1, wobei die genannte Polyesterzusammensetzung im Wesentlichen frei von Weichmacher ist.

4. Verfahren nach Anspruch 3, wobei die genannte Maximaltemperatur innerhalb des Schmelzpunktbereichs jedes der genannten einen oder mehreren Polyester liegt.

5. Verfahren nach Anspruch 3, wobei die genannten einer oder mehreren Polyester biologisch abbaubar sind.

6. Verfahren nach Anspruch 1, wobei die genannte Maximaltemperatur von 70 °C bis 170 °C ist.

7. Verfahren nach Anspruch 6, wobei die genannten nicht-aromatischen Dicarbonsäuren ausgewählt aus der Gruppe sind, die aus Glutarsäure, Diglykolsäure, Bernsteinsäure, Adipinsäure und 1,4-Cyclohexandicarbonsäure besteht; und die genannten aromatischen Dicarbonsäuren ausgewählt aus der Gruppe sind, die aus Terephthalsäure, Isophthalsäure und 2,6-Naphthalindicarbonsäure besteht.

8. Verfahren nach Anspruch 7, wobei die genannten Diole ausgewählt aus der Gruppe sind, die aus 1,4-Butandiol, 1,3-Propandiol, Ethylenglykol, 1,6-Hexandiol, Diethylenglykol und 1,4-Cyclohexandimethanol besteht.

9. Verfahren nach Anspruch 8, wobei die genannten Disäure-Reste die Reste von Adipinsäure und Terephthalsäure umfassen; die genannten Diole-Reste die Reste von 1,4-Butandiol umfassen; und der genannte AAPE eine Kristallisationshalbzeit aus dem geschmolzenen Zustand von weniger als 3 Minuten aufweist.

10. Verfahren nach Anspruch 9, wobei die genannte Maximaltemperatur im Bereich von 90 °C bis 150 °C liegt und der Schmelzpunktbereich des genannten AAPE ist.

11. Verfahren nach Anspruch 1, wobei die genannten einer oder mehrerer Polyester umfassen ferner 0 bis 2 Gew.-%, bezogen auf das Gesamtgewicht der genannten eines oder mehreren Polyester, der Reste eines oder mehreren Verzweigungsmittel, ausgewählt aus der Gruppe bestehend aus Glycerin, Trimethylolpropan, Trimethylolethan, Polyethertriole, Glycerin, 1,2,4-Butantriol, Pentaerythritol, 1,2,6-Hexantriol, Sorbitol, 1,1,4,4-Tetrakis(hydroxymethyl)-cyclohexan, Tris-(2-hydroxyethyl)-isocyanurat, Dipentaerythritol, Weinsäure, Zitronensäure, Apfelsäure, Trimesinsäure, Trimellitsäure, Trimellitsäureanhydrid, Pyromellitsäure, Pyromellitsäureanhydrid, 4-Carboxyphthalanhydrid und Hydroxyisophthalsäure; und 0 bis 5 Gew.-%, bezogen auf das Gesamtgewicht der genannten eines oder mehrerer Polyester, eines oder mehrerer Kettenverlängerer, ausgewählt aus der Gruppe bestehend aus Toluol-2,4-diisocyanat, Toluol-2,6-diisocyanat, 2,4'-Diphenylmethandüsocyanat, Naphthalin-1,5-diisocyanat, Xylylenediisocyanat, Hexamethylendiisocyanat, Isophorondiisocyanat und Methylen-bis(2-isocyanatocyclohexan), 1,4-Butandioldivinylether, 1,5-Hexandioldivinylether und 1,4-Cyclohexandimethanoldivinylether.

12. Verfahren nach Anspruch 1, wobei das genannte Freigabe-Additive 0,1 Gew.-% bis 2 Gew.-% des Gesamtgewichts der genannten Zusammensetzung beträgt und mindestens eine Verbindung umfasst, die aus der Gruppe ausgewählt ist, bestehend aus Fettsäureamiden, Metallsalzen von organischen Säuren, Fettsäuren, Fettsäuresalzen, Fettsäureester, Kohlenwasserstoffwachsen, Esterwachsen, Phosphorsäureester, chemisch modifizierten Polyolefinwachsen, Glycerinester, Talkum und Acrylcopolymeren.

13. Verfahren nach Anspruch 12, wobei das genannte Freigabe-Additive mindestens eine Verbindung umfasst, die aus der Gruppe ausgewählt ist, bestehend aus Erucylamid, Stearamid, Calciumstearat, Zinkstearat, Stearinsäure, Montansäure, Montansäureester, Montansäuresalzen, Ölsäure, Palmitinsäure, Paraffinwachs, Polyethylenwachsen, Poly(propylen)wachsen, Karnaubapalmewachs, Glycerinmonostearat und Glycerindistearat.

14. Verfahren nach Anspruch 12, wobei das genannte Freigabe-Additive umfasst: (i) eine Fettsäure oder ein Fettsäuresalz mit mehr als 18 Kohlenstoffatomen und (ii) ein Esterwachs umfassend einen Fettsäurerest mit mehr als 18 Kohlenstoffatomen und einen Alkoholrest mit 2 bis 28 Kohlenstoffatomen, wobei das Verhältnis der genannten Fettsäure oder Fettsäuresalz zum genannten Esterwachs 1:1 oder höher ist.

15. Verfahren nach Anspruch 14, wobei die genannte Fettsäure Montansäure umfasst; das genannte Fettsäuresalz ein oder mehrere Säuresalze umfasst, die aus der Gruppe ausgewählt sind, bestehend aus dem Natriumsalz der Montansäure, dem Calciumsalz der Montansäure und dem Lithiumsalz der Montansäure; und der genannte Fettsäurerest des genannten Esterwachses Montansäure umfasst.

16. Verfahren nach Anspruch 15, wobei der genannte Alkoholrest des genannten Esterwachses die Reste einer oder mehreren Hydroxylverbindungen umfasst, die aus der Gruppe ausgewählt sind, bestehend aus Montanylalkohol, Ethylenglykol, Butylenglykol, Glycerin und Pentaerythritol.

17. Verfahren nach Anspruch 1, wobei die genannte Zusammensetzung umfasst ferner 5 bis 40 Gew.-%, bezogen auf das Gesamtgewicht der genannten Zusammensetzung, von mindestens einem Flammschutzmittel, das aus der Gruppe ausgewählt ist, bestehend aus Monoester, Diester und Triester der Phosphorsäure, wobei das genannte Flammschutzmittel mit mindestens einem der genannten einen oder mehreren Polyestern mischbar ist.

18. Verfahren nach Anspruch 17, wobei das genannte Flammschutzmittel das Resorcinol-bis(diphenylphosphat) umfasst.

## Revendications

1. Procédé pour former un film ou une feuille comprenant le calandrage d'une composition de polyester, ladite composition comprenant un ou plusieurs polyesters aliphatiques-aromatiques semicristallins (AAPE), ayant un temps de demi-cristallisation depuis l'état fondu de moins de 5 minutes, et un additif antiadhérent, à une température maximale en dessous de la température supérieure de la gamme de points de fusion de chacun desdits un ou plusieurs polyesters, de sorte que la température de sonde de fusion du polymère varie de 80°C à 160 °C, dans lequel ledit AAPE est un copolyester comprenant
(A) des résidus diol comprenant les résidus d'un ou plusieurs diols substitués ou non substitués, linéaires ou ramifiées, choisis dans le groupe constitué des diols aliphatiques contenant 2 à 8 atomes de carbone, des éther glycols polyalkylénés contenant 2 à 8 atomes de carbone, et des diols cycloaliphatiques contenant 4 à 12 atomes de carbone, dans lesquels lesdits diols substitués contiennent 1 à 4 substituants choisis de manière indépendante parmi un atome d'halogène, un groupe aryle en C₆-C₁₀, et un groupe alcoxy en C₁-C₄ ; et
(B) des résidus diacides comprenant
(i) 35 à 99 % en mole, sur la base du total de moles de résidus diacides, des résidus d'un ou plusieurs acides dicarboxyliques non aromatiques substitués ou non substitués, linéaires ou ramifiées, choisis dans le groupe constitué des acides dicarboxyliques aliphatiques contenant 2 à 12 atomes de carbone et des acides dicarboxyliques cycloaliphatiques contenant 5 à 10 atomes de carbone, dans lesquels lesdits acides dicarboxyliques non aromatiques substitués contiennent 1 à 4 substituants choisis parmi un atome d'halogène, un groupe aryle en C₆-C₁₀, et un groupe alcoxy en C₁-C₄ ; et
(ii) 1 à 65 % en mole, sur la base du total de moles de résidus diacides, des résidus d'un ou plusieurs acides dicarboxyliques aromatiques substitués ou non substitués contenant 6 à 10 atomes de carbone, dans lesquels lesdits acides dicarboxyliques aromatiques substitués contiennent 1 à 4 substituants choisis parmi un atome d'halogène, un groupe aryle en C₆-C₁₀, et un groupe alcoxy en C₁-C₄.

2. Procédé selon la revendication 1, dans lequel ladite composition de polyester est constituée essentiellement d'un polyester et d'un additif antiadhérent.

3. Procédé selon la revendication 1, dans lequel ladite composition de polyester est sensiblement sans plastifiant.

4. Procédé selon la revendication 3, dans lequel ladite température maximale est dans la gamme des points de fusion de chacun desdits un ou plusieurs polyesters.

5. Procédé selon la revendication 3, dans lequel lesdits un ou plusieurs polyesters sont biodégradables.

6. Procédé selon la revendication 1, dans lequel ladite température maximale est de 70 à 170 °C

7. Procédé selon la revendication 6, dans lequel lesdits acides dicarboxyliques non-aromatiques sont choisis dans le groupe constitué de l'acide glutarique, l'acide diglycolique, l'acide succinique, l'acide adipique et l'acide 1,4-cyclohexane-dicarboxylique ; et lesdits acides dicarboxyliques aromatiques sont choisis dans le groupe constitué de l'acide téréphtalique, l'acide isophtalique et l'acide 2,6-naphthalènedicarboxylique.

8. Procédé selon la revendication 7, dans lequel lesdits diols sont choisis dans le groupe constitué du 1,4-butanediol ; du 1,3-propanediol ; de l'éthylène glycol ; du 1,6-hexanediol ; du diéthylène glycol ; et du 1,4-cyclobexanediméthanol.

9. Procédé selon la revendication 8, dans lequel lesdits résidus diacides comprennent les résidus de l'acide adipique et l'acide téréphtalique ; lesdits résidus diols comprennent les résidus du 1,4-butanediol ; et ledit AAPE a un temps de demi-cristallisation depuis l'état fondu de moins de 3 minutes.

10. Procédé selon la revendication 9, dans lequel ladite température maximale est de 90 à 150 °C et est la gamme de points de fusion dudit AAPE.

11. Procédé selon la revendication 1, dans lequel ledit un ou plusieurs polyesters comprend en outre 0 à 2 pour cent en poids, sur la base du poids total dudit un ou plusieurs polyesters, des résidus d'un ou plusieurs agents de branchement choisis dans le groupe constitué du glycérol, triméthylolpropane, triméthyloléthane, polyéthertriols, glycérol, 1,2,4-butanetriol, pentaérythritol, 1,2,6-hexanetriol, sorbitol, 1,1,4,4-tétrakis(hydroxyméthyl)cyclohexane, tris(2-hydroxyéthyl)isocyanurate, dipentaérythritol, acide tartrique, acide citrique, acide malique, acide trimésique, acide trimellitique, anhydride trimellitique, acide pyromellitique, anhydride pyromellitique, anhydride 4-carboxyphtalique et acide hydroxyisophthalique ; et 0 à 5 pour cent en poids, sur la base du poids total dudit un ou plusieurs polyesters, d'un ou plusieurs allongeurs de chaîne choisis dans le groupe constitué du 2,4-diisocyanate de toluène, 2,6-diisocyanate de toluène, diisocyanate de 2,4'-diphényl-méthane, naphthalène-1,5-diisocyanate, diisocyanate de xylylène, diisocyanate d'hexaméthylène, diisocyanate d'isophorone et méthylènebis(2-isocyanatocyclohexane), divinyl éther de 1,4-butanediol, divinyl éther de 1,5-hexanediol et divinyl éther de 1,4-cyclohexanediméthanol.

12. Procédé selon la revendication 1, dans lequel ledit additif antiadhérent représente 0,1 % en poids à 2 % en poids du poids total de ladite composition et comprend au moins un composé choisi dans le groupe constitué des amides d'acides gras, des sels métalliques d'acides organiques, des acides gras, des sels d'acides gras, des esters d'acides gras, des cires hydrocarbonées, des cires ester, des esters de l'acide phosphorique, des cires polyoléfines chimiquement modifiées, des esters de glycérine, du talc et des copolymères acryliques.

13. Procédé selon la revendication 12, dans lequel ledit additif antiadhérent comprend au moins un composé choisi dans le groupe constitué de l'érucylamide, du stéaramide, du stéarate de calcium, du stéarate de zinc, de l'acide stéarique, de l'acide montanique, des esters de l'acide montanique, des sels de l'acide montanique, de l'acide oléique, de l'acide palmitique, d'une cire de paraffine, des cires de polyéthylène, des cires de poly(propylène), de la cire de carnauba, du monostéarate de glycérol et du distéarate de glycérol.

14. Procédé selon la revendication 12, dans lequel ledit additif antiadhérent comprend (i) un acide gras ou un sel d'un acide gras contenant plus de 18 atomes de carbone et (ii) une cire ester comprenant un résidu d'acide gras contenant plus de 18 atomes de carbone et un résidu alcool contenant de 2 à 28 atomes de carbone, dans lequel le rapport dudit acide gras ou dudit sel d'un acide gras à ladite cire ester est de 1:1 ou plus.

15. Procédé selon la revendication 14, dans lequel ledit acide gras comprend l'acide montanique ; ledit sel d'un acide gras comprend un ou plusieurs sels d'acide choisis dans le groupe constitué du sel de sodium de l'acide montanique, du sel de calcium de l'acide montanique et du sel de lithium de l'acide montanique ; et ledit résidu d'acide gras de ladite cire ester comprend l'acide montanique.

16. Procédé selon la revendication 15, dans lequel ledit résidu alcool de ladite cire ester comprend les résidus d'un ou plusieurs composés hydroxyle choisis dans le groupe constitué de l'alcool montanylique, l'éthylène glycol, le butylène glycol, le glycérol et le pentaérythritol.

17. Procédé selon la revendication 1, dans lequel ladite composition comprend en outre 5 à 40 % en poids, sur la base du poids total de ladite composition, d'au moins un produit ignifuge choisi dans le groupe constitué des monoesters, des diesters et des triesters de l'acide phosphorique, dans lequel ledit produit ignifuge est miscible à au moins un desdits un ou plusieurs polyesters.

18. Procédé selon la revendication 17, dans lequel ledit produit ignifuge comprend le bis(diphényl phosphate) de résorcinol.
